# EUROPEAN PATENT APPLICATION

(11) **EP 4 742 621 A1**
(43) Date of publication of application: **13.05.2026**
(21) Application number: 25213601.5
(22) Date of filing: 05.11.2025
(51) Int. Cl.: H04L 61/2514

(54) **STATELESS ADDRESS TRANSLATION IN MULTI-TENANT CLOUD ENVIRONMENTS**

(30) Priority: 06.11.2024 US 202463716859 P; 27.10.2025 US 202519370588
(71) Applicant: Mellanox Technologies, Ltd., 2069200 Yokneam (IL)
(72) Inventor: HANEGBI, Liel Shoshan, 2069200 Yokneam (IL); OVED, Tzah, 2069200 Yokneam (IL); EFRAIM, Ron Yuval, 2069200 Yokneam (IL); KIMMERLIN, Mael, 2069200 Yokneam (IL)
(74) Representative: Mathys & Squire

(57) **Abstract**

Methods and systems for stateless address translation in multi-tenant cloud environments are provided. Network traffic is received from a first tenant of a multi-tenant system. The received network traffic is associated with first source and destination host addresses of a first host allocated to the first tenant and a first destination host associated with the network traffic. The first source and destination host addresses are provided as an input to a bi-directional address translation function that translates given host addresses to networking addresses and converts given host addresses to networking addresses and given networking addresses to host addresses. One or more outputs of the bi-directional address translation function are obtained, which include a first source networking address and a first destination networking address. The received network traffic of the first tenant is forwarded to a recipient device of the multi-tenant system via a network channel associated with the first tenant based on the first source networking address and a first destination networking address.

## Description

### RELATED APPLICATIONS

This application claims benefit of the U.S. Provisional Patent Application 63/716,859 filed November 6, 2024, the contents of which are incorporated in their entirety by reference herein.

### TECHNICAL FIELD

Aspects and implementations of the present disclosure relate to methods and systems for stateless address translation in multi-tenant cloud environments.

### BACKGROUND

In a multi-tenant system, bare metal isolation refers to the enforcement of strict network and resource separation between different tenants that are each allocated dedicated computing resources (referred to as bare metal hosts). Unlike virtualized environments, where the cloud provider can rely on hypervisors to enforce isolation, bare metal tenancy presents unique challenges, as the provider does not control the tenant's operating system or stack software. Accordingly, networking devices of the multi-tenant system are configured to prevent network traffic originating from one tenant's host from reaching resources or network domains of another tenant.

### SUMMARY

The invention is defined by the claims. In order to illustrate the invention, aspects and embodiments which may or may not fall within the scope of the claims are described herein.

Methods and systems for stateless address translation in multi-tenant cloud environments are provided. Network traffic is received from a first tenant of a multi-tenant system. The received network traffic is associated with first source and destination host addresses of a first host allocated to the first tenant and a first destination host associated with the network traffic. The first source and destination host addresses are provided as an input to a bi-directional address translation function that translates given host addresses to networking addresses and converts given host addresses to networking addresses and given networking addresses to host addresses. One or more outputs of the bi-directional address translation function are obtained, which include a first source networking address and a first destination networking address. The received network traffic of the first tenant is forwarded to a recipient device of the multi-tenant system via a network channel associated with the first tenant based on the first source networking address and a first destination networking address.

Any feature of one aspect or embodiment may be applied to other aspects or embodiments, in any appropriate combination. In particular, any feature of a method aspect or embodiment may be applied to an apparatus aspect or embodiment, and vice versa.

### BRIEF DESCRIPTION OF THE DRAWINGS

Aspects and implementations of the present disclosure will be understood more fully from the detailed description given below and from the accompanying drawings of various aspects and implementations of the disclosure, which, however, should not be taken to limit the disclosure to the specific aspects or implementations, but are for explanation and understanding only.
**FIG 1** is a block diagram of an example system architecture, according to at least one embodiment;
**FIG. 2** is a block diagram of an example networking device and an example network controller of a multi-tenant system, according to at least one embodiment;
**FIG. 3** illustrates a flow diagram of an example method for stateless address translation in multi-tenant cloud environments, according to at least one embodiment;
**FIG. 4** illustrates a flow diagram of another example method for stateless address translation in multi-tenant cloud environments, according to at least one embodiment;
**FIG. 5A** illustrates hardware structures for inference and/or training logic, according to at least one embodiment;
**FIG. 5B** illustrates hardware structures for inference and/or training logic, according to at least one embodiment;
**FIG. 6** illustrates an example data center system, according to at least one embodiment;
**FIG. 7** illustrates a computer system, according to at least one embodiment;
**FIG. 8** illustrates a computer system, according to at least one embodiment;
**FIG. 9** illustrates at least portions of a graphics processor, according to one or more embodiments;
**FIG. 10** illustrates at least portions of a graphics processor, according to one or more embodiments;
**FIG. 11** is an example data flow diagram for an advanced computing pipeline, in accordance with at least one embodiment;
**FIG. 12** is a system diagram for an example system for training, adapting, instantiating and deploying machine learning models in an advanced computing pipeline, in accordance with at least one embodiment; and
**FIGS. 13A** **and** **13B** illustrate a data flow diagram for a process to train a machine learning model, as well as client-server architecture to enhance annotation tools with pre-trained annotation models, in accordance with at least one embodiment;

### DETAILED DESCRIPTION OF THE DRAWINGS

Aspects of the present disclosure generally relate to stateless address translation in multi-tenant cloud environments. In modern cloud computing environments, systems may allocate system resources (e.g., computing resources, such as servers) to different tenants. Such resources are referred to as bare-metal hosts. Each tenant may run its own operating system and applications directly on the resources of the bare-metal hosts, without the abstraction layer of a hypervisor or a virtual machine. This approach is referred to as bare-metal tenancy and is increasingly popular for workloads that involve high performance, low latency, or specific hardware constraints. However, bare-metal tenancy introduces significant challenges for network security and management, particularly in multi-tenant data centers where many tenants may share the same physical infrastructure. For example, it is a challenge for systems to enforce strict isolation between tenants and ensure that network traffic from one tenant cannot access or interfere with the resources for another.

Bare-metal isolation refers to mechanisms or techniques by a system that prevent network traffic originating from a first tenant's host from reaching the network domains or resources of a second tenant. In virtualized environments, isolation can be enforced by a hypervisor, which can control and filter network traffic at a software level. As a cloud system provider does not access or control a tenant's operating system or applications, the system provider is unable to rely on host-based controls for network isolation. Accordingly, the enforcement of tenant boundaries shifts to the network infrastructure, and more specifically, to the network devices installed at or otherwise associated with each bare-metal host.

Conventionally, bare-metal hosts implement tenant isolation at the switching layer, using powerful data center switches to enforce access control lists (ACLs), virtual local area networks (VLANs), overlay tunnels, and so forth. As the number of tenants and hosts grow, this approach can be inflexible and difficult to scale. Some systems have shifted toward programmable networking devices, such as smart network interface card (NICs) or data processing units (DPUs), to enforce isolation and steer traffic within the cloud-based environment. Such devices run agents that receive policies from a centralized networking controller (e.g., a software-defined networking (SDN) controller) and program the networking device's packet processing pipeline accordingly. The centralized networking controller communicates with each networking device agent to configure tunnels, ACLs, and other rules that implement overlay networking and tenant separation.

While the above described programmable networking devices offer greater flexibility and programmability than traditional switches, they introduce new challenges when deployed at scale. In conventional SDN architectures, each networking device agent maintains a mapping table that correlates the "inner" networking address of each tenant (e.g., the address used within the tenant's network) to the "outer" networking address of the networking device or tunnel endpoint (e.g., the address used for forwarding network traffic across the system's underlay network). As the number of hosts and tenants grows from thousands to hundreds of thousands, these mapping tables can become significantly large, consuming significant amounts of memory, processing cycles, and power on each networking device. As hosts and/or tenants are added or removed from the system, such mapping tables become out of date and are updated, which generates substantial control plane traffic and increases operational complexity. Further, some cloud providers prefer to use simpler, low-resource networking devices (e.g., which have limited processing power and memory and are subject to reduced power budgets) for handling tenant network traffic, reserving computationally expensive programmable networking devices for specialized roles. It is impractical to implement the conventional table-driven techniques on such "simple" networking devices, as simple networking devices lack the memory space to store large mapping tables and/or the processing power to process the high rate of control updates associated with large tenant clusters.

Embodiments of the present disclosure provide techniques for enabling secure and scalable tenant isolation in multi-tenant cloud environments including networking devices associated with limited processing and memory resources. In some embodiments, a system can include one or more host systems (referred to as "hosts" herein) that each support multiple tenants. Each host can be equipped or otherwise associated with a dedicated networking device (e.g., a NIC) that is responsible for network traffic input/output (I/O) handling for each tenant supported by the host. The system may include a centralized network controller (e.g., a SDN controller) that manages and supports each networking device of the system, as described herein.

In some embodiments, the centralized network controller (referred to simply as "network controller" herein) can determine that a networking device is to operate in accordance with an isolation mode. Isolation mode refers to a secure operational state of a networking device in which the networking device enforces strict network separation between tenants of a corresponding host. The network controller may determine that a particular networking device is to operate in the isolation mode in accordance with a networking protocol of the system and/or by detecting that multiple tenants have been initiated at the corresponding host. The network controller can transmit an instruction to the networking device to cause the networking device to initiate the isolation mode.

In some embodiments, the instruction to operate in isolation mode can include, or otherwise cause the networking device to launch, a device agent that operates under the controller's supervision. Such agent can cause the networking device to provide a set of network addresses associated with the networking device (e.g., unique identifiers assigned to the networking device) to the network controller. The network controller can use the provided set of network addresses to update or otherwise configure a bi-directional address translation function for use by the networking device. The bi-directional address translation function converts a host address (also referred to as an "inner address") into a networking address (also referred to as an "outer address") that is suitable for forwarding the packet through the network, and vice versa. The bi-directional address translation function can be a bit masking function, a prefix modification function, and/or a bit value flipping function. The network controller can update the function based on the set of network addresses associated with the networking device by modifying one or more parameters of the function to include or otherwise reference the set of network addresses associated with the networking device.

The network controller can provide the bi-directional address translation function to the networking device for application to incoming network traffic from the host. As incoming network traffic is received, the agent running on the networking device can provide a source host address and/or a destination host address indicated by the incoming network traffic as an input to the address translation function and obtain one or more outputs, which can include a translated source networking address (e.g., source tunnel identifier (ID)) and/or a destination networking address (e.g., destination tunnel ID). The networking device agent can forward the received network traffic to the appropriate recipient device within the system based on the translated network address(es) using a network channel and/or overlay associated with the tenant. In some embodiments, the networking device may receive network traffic directed to the tenant (e.g., from another networking device allocated to another host of the system). The networking device agent can provide the networking address associated with the received network traffic as an input to the bi-directional address translation function and can obtain one or more outputs including a translated host address. The networking device agent can forward the network traffic to the tenant based on the translated host address, as described herein.

The networking device agent can perform additional operations associated with the operation of the networking device, in some embodiments. For example, the networking device agent can collect and export telemetry data and/or monitoring data associated with the networking device to the network controller. Such telemetry data and/or monitoring data can include, for example, network traffic statistics (e.g., a number of packets and/or bytes transmitted and received by the networking device), error counts (e.g., dropped packets, cyclic redundancy check (CRC) errors, malformed frames, etc.), flow-level information (e.g., a number of active connections or sessions passing through the networking device), and so forth. The agent can additionally or alternatively collect and report on protocol-specific events, such as a number of address resolution protocol (ARP) or dynamic host configuration protocol (DHCP) requests handled, tunnel encapsulation/decapsulation counts, per-tenant or per-queue utilization metrics, etc.

Aspects and embodiments of the present disclosure provide techniques to enable a system to offer robust, scalable, and secure tenant isolation in a multi-tenant, bare-metal cloud environment using networking devices with limited processing and memory resources. The stateless, bi-directional address translation function of the present disclosure enables networking devices (e.g., and agents running on networking devices) to identify networking addresses and/or host addresses associated with incoming network traffic quickly and with minimal computing resources, which significantly reduces computing resource and control-plane overhead while maintaining strict tenant isolation boundaries. Further, the isolation mode described by the present disclosure enables the networking device (via the agent) to autonomously manage its own network configuration and export trustworthy telemetry directly to the network controller, independent of host or tenant software. Accordingly, embodiments of the present disclosure enable high-performance, cost-effective, and tamper-resistant network isolation for bare-metal tenants.

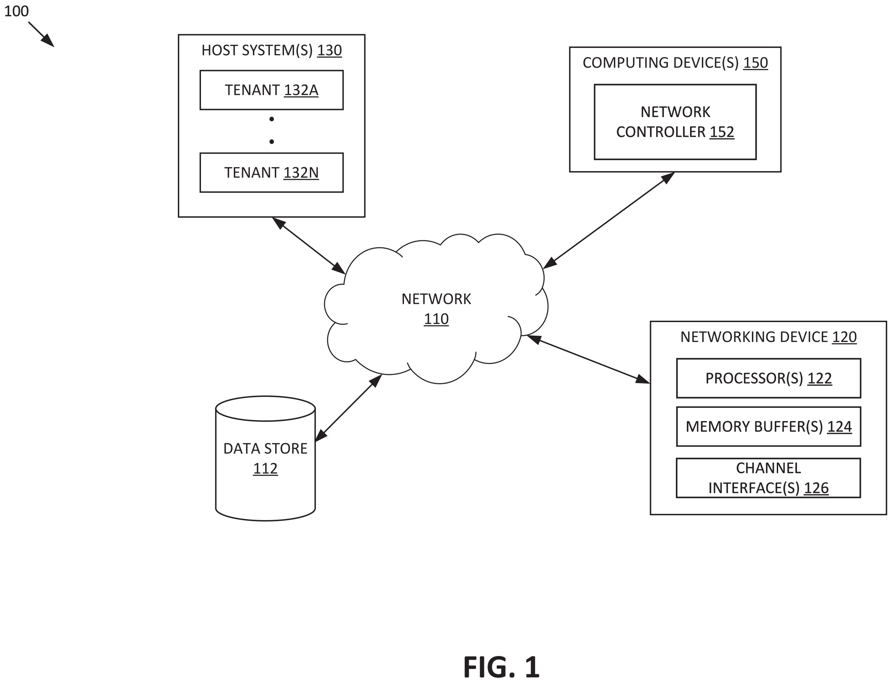

**FIG 1** is a block diagram of an example system architecture 100, according to at least one embodiment. In some embodiments, system architecture 100 reflects a networking system that includes one or more interconnected computing devices configured to facilitate communication of data between source systems and destination systems. For example, system architecture 100 (also referred to as "system" herein) can facilitate the transfer of packets (e.g., data packets, network packets, etc.) from one or more sources to one or more recipients via a network 110. In implementations, network 110 may include a public network (e.g., the Internet), a private network (e.g., a local area network (LAN) or wide area network (WAN)), a wired network (e.g., Ethernet network), a wireless network (e.g., an 802.11 network or a Wi-Fi network), a cellular network (e.g., a Long Term Evolution (LTE) network), routers, hubs, switches, server computers, and/or a combination thereof.

In some embodiments, a source and/or a recipient can include or otherwise correspond to a tenant 132 supported by a host system 130. A host system 130 includes one or more computing resources (e.g., processing devices, memory, interfaces, etc.) that perform operations associated with one or more tenants 132 of a multi-tenant environment. A tenant 132 refers to a logical instance that executes operations using a set of resources (e.g., of a host system 130) that are isolated from resources allocated to other logical instances associated with other tenants. The host system 130 can include or otherwise be associated with a physical server (e.g., a bare-metal server) equipped with one or more processors, memory modules, storage devices, etc. In some embodiments, each host system 130 can be allocated or otherwise associated with a dedicated networking device 120. In some instances, a host system 130 can further include software components, such as an operating system (OS), a virtualization layer (e.g., a hypervisor, a container, etc.) and/or other agents that coordinates execution of multiple tenants 132 on the host system 130. For example, a virtualization layer can instantiate and manage tenants as respective logical execution contexts, each having access to a portion of the hardware resources of the host system 130. To maintain separation between tenants 132, the host system 130 can enforce isolation mechanisms that prevent a first tenant (e.g., tenant 132A) from accessing resources of a second tenant (e.g., tenant 132N), for example by partitioning memory, assigning processing cycles, and/or providing virtualized network interfaces that are mapped to physical interfaces of the host system. Such isolation allows multiple tenants to execute concurrently on the same host hardware while preserving independence of execution, security, and resource management for each tenant 132. It should be noted that although **FIG. 1** illustrates a single host system 130, system 100 can include any number of host systems 130 supporting any number of tenants 132.

As described above, each host system 100 can be equipped with or otherwise associated with a dedicated networking device 120, such as network interface card (NIC), that provides connectivity between host system 100 and one or more external networks (e.g., network 110, another network, etc.). Networking device 120 can include one or more processors 122, one or more memory buffers 124, and/or one or more channel interfaces 126. The processor(s) 122 can include or otherwise implement a media access control (MAC) unit configured to generate and process frames in accordance with a network protocol, in some embodiments. In other or similar embodiments, processor(s) 122 can include or otherwise implement a direct memory access (DMA) engine configured to move packet data between memory of host system 130 and one or more buffers 124 of networking device 120. In some embodiments, buffer(s) 124 can include on-chip buffers (e.g., transmit and received first in first out (FIFO) buffers) that operate as configuration registers accessible to host system 130.

In some embodiments, networking device 120 can include or otherwise correspond to a "low resource" networking device, which includes a minimal embedded processor and/or limited on-board memory. In such embodiments, networking device 120 may be capable of supporting basic packet transmission and reception, and may be unable to run or otherwise execute complex software or maintain tables consuming significant amounts of memory space. In contrast, a programmable networking device may be equipped with multiple core processing units (e.g., central processing units (CPUs), field programmable gate arrays (FPGAs), dedicated packet processing engines, and/or memory (e.g., dynamic random-access memory (DRAM), static random-access memory (SRAM), etc.). A programmable networking device may be capable of running sophisticated software agents, maintaining large mapping tables, and/or performing advanced networking functions. Generally, a low resource networking device may consume fewer computing resources (e.g., processing cycles, memory space, power, etc.) and support less complex operations and functionality than a programmable networking device. It should be noted that although some embodiments and examples of the present disclosure are described with respect to a simple NIC, such embodiments and examples can be applied to any type of "low resource" networking device. Further, such embodiments and examples can be applied to programmable networking devices and other types of networking devices, such as switches, routers, etc.

Network controller 152 (e.g., operating via computing device(s) 150) is a centralized management entity responsible for orchestrating network configuration, policy enforcement, and/or monitoring across the multi-tenant environment. Network controller 152 can perform operations associated with maintaining visibility of packets received by and/or from a networking device 120, determining routing or delivery of such packets to one or more tenants 132 executed by host system 130, and enforce policies such as access control, quality of service (QoS), or traffic shaping. In some embodiments, network controller 152 can demultiplex ingress packets from a shared receive queue of networking device 120 into per-tenant virtual interfaces, and can multiplex egress packets generated by tenants into a transmit queue of networking device 120 for transmission over the network medium.

In some embodiments, network controller 152 can include a software-defined networking (SDN) controller, which provides a logically centralized view of a SDN and manages forwarding behavior of one or more network devices 120. A SDN refers to a networking architecture in which control of packet forwarding is separated from the forwarding hardware and centralized in one or more controller components. In such architecture, networking devices 120 (e.g., switches, routers, NICs, etc.) form a data plane that performs packet transmission and reception in accordance with forwarding rules, while a SDN controller provides a logically centralized control plane that defines, distributes, and updates the forwarding rules. The SDN controller can expose programmatic interfaces through which higher-level applications or orchestration systems specify policies, such as routing behavior, traffic prioritization, or access control.

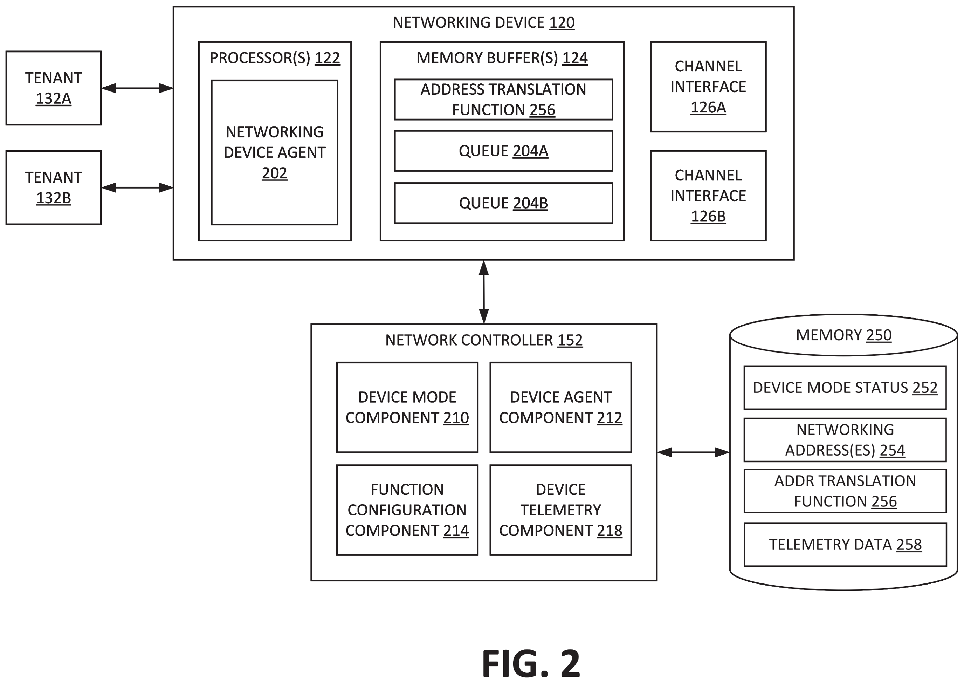

As described herein, network controller 152 can cause a networking device 120 to operate in an isolation mode, which refers to an operational state in which the networking device 120 enforces strict network separation between tenants 132. When networking device 120 is placed in an isolation mode, it is configured (e.g., with a firmware command) to prevent the host system from modifying or bypassing isolation settings of the networking device 120. As described herein, a networking device 120 in isolation mode becomes responsible for enforcing tenant boundaries, ensuring that only authorized network traffic is permitted and that all other traffic is dropped or blocked. The networking device 120 operating in isolation mode enforces tenant boundaries by performing stateless address translation between host addresses and networking addresses using a bi-directional address translation function configured by network controller 152. Further details regarding isolation mode of networking device 120 and the bi-directional address translation function are described with respect to **FIGs. 2-4** below.

System 100 can include additional or alternative components, in some embodiments. For example, system 100 may include a data store 112 that includes one or more persistent or temporary storage components that are capable of storing data as well as data structures to tag, organize, and index the data. Data can include (or include data of) one or more electronic documents and/or metadata associated with the one or more electronic documents, in accordance with embodiments described herein. Data store 112 can be hosted by one or more storage devices, such as main memory, magnetic or optical storage based disks, tapes or hard drives, NAS, SAN, and so forth. In some implementations, data store 112 can be a network-attached file server, while in other embodiments data store 112 can be some other type of persistent storage such as an object-oriented database, a relational database, and so forth. In some embodiments, data store 112 can store data or information collected by control engine 151 and/or other components of system 100. For example, data store 112 can store topology data, flow state data (e.g., active flows identified at system 100 and/or related metadata), forwarding/routing information, policy data, and so forth.

In other or similar embodiments, system 100 can include a predictive system (not shown), which includes or otherwise implements one or more AI model(s) 182. An AI model 182 can perform one or more tasks associated with a given prompt. In some embodiments, the one or more tasks can include or otherwise correspond to network prediction and optimization tasks, anomaly and threat detection tasks, computing resource management tasks, policy enforcement and/or application awareness tasks, fault prediction and/or self-healing tasks, network analytics and insight tasks, and so forth.

In some implementations, host system(s) 130, computing device(s) 150, networking device 120, and/or data store 112, etc. may be or may otherwise operate using one or more computing devices (such as a rackmount server, a router computer, a server computer, a personal computer, a mainframe computer, a laptop computer, a tablet computer, a desktop computer, etc.), data stores (e.g., hard disks, memories, databases), networks, software components, and/or hardware components that may be used to enable assignment of execution of an application using various processing units. It should be noted that in some other implementations, the functions of host system(s) 130, computing device(s) 150, networking device 120, and/or data store 112 may be provided by a fewer number of machines. For example, in some implementations, host system(s) 130, computing device(s) 150, and/or networking device 120 may be integrated into a single machine, while in other implementations host system(s) 130, computing device(s) 150, and/or networking device 120 may be integrated into multiple machines. In addition, in some implementations, computing device(s) 150 and/or networking device 120 may be integrated into host system 130. In general, functions described in implementations as being performed by host system(s) 130, computing device(s) 150, and/or networking device 120 may also be performed on one or more edge devices (not shown) and/or client devices (not shown), if appropriate. In addition, the functionality attributed to a particular component may be performed by different or multiple components operating together. Host system(s) 130, computing device(s) 150, and/or networking device 120 may also be accessed as a service provided to other systems or devices through appropriate application programming interfaces (APIs).

In some embodiments, system 100 can include or otherwise correspond to a control system for an autonomous or semi-autonomous machine, a perception system for an autonomous or semi-autonomous machine, a system for performing simulation operations, a system for performing digital twin operations, a system for performing light transport simulation, a system for performing collaborative content creation for three-dimensional (3D) assets, a system for performing deep learning operations, a system implemented using an edge device, a system implemented using a robot, a system for performing conversational AI operations;, a system for performing operations using one or more large language models (LLMs), a system for performing operations using one or more small language models (SLMs), a system for performing operations using one or more vision language models (VLMs), a system for performing operations using one or more multimodal language models (MMLMs), a system for performing synthetic data generation, a system for generating synthetic data using AI, a system for presenting at least one of virtual reality content, augmented reality content, or mixed reality content, a system incorporating one or more virtual machines (VMs), a system using or deploying one or more inference microservices, a system that incorporates one or more machine learning models deployed in a service or microservice along with an OS-level virtualization package, a system implemented at least partially in a data center; or a system implemented at least partially using cloud computing resources (e.g., computing resource(s) 140), etc.

**FIG. 2** is a block diagram of an example networking device 120 and an example network controller 152 of a multi-tenant system, according to at least one embodiment. As described above, networking device 120 can be allocated to support network traffic associated with tenants 132 of a host system 130. For purpose of example and illustration only, embodiments and examples described with respect to **FIGs. 2-4** are directed to tenant 132A and tenant 132B of a host system 130. However, such embodiments and examples are not intended to be limiting and can be applied to any tenant 132 of any host system 130 and/or of another system connected to or otherwise accessible by components of system 100. Network controller 152 can be a centralized management entity that is responsible for orchestrating network configuration, policy enforcement, and/or monitoring across networking devices 120 of a multi-tenant environment. Details regarding networking device 120 and network controller 152 are described with respect to **FIGs. 2-4** below.

In some embodiments, network controller 152 and/or networking device 120 can be connected to a memory 250. Memory 250 can include or otherwise correspond to one or more regions of memory of data store 112, in some embodiments. In other or similar embodiments, memory 250 can include or otherwise correspond to other memory of or accessible to components of system 100.

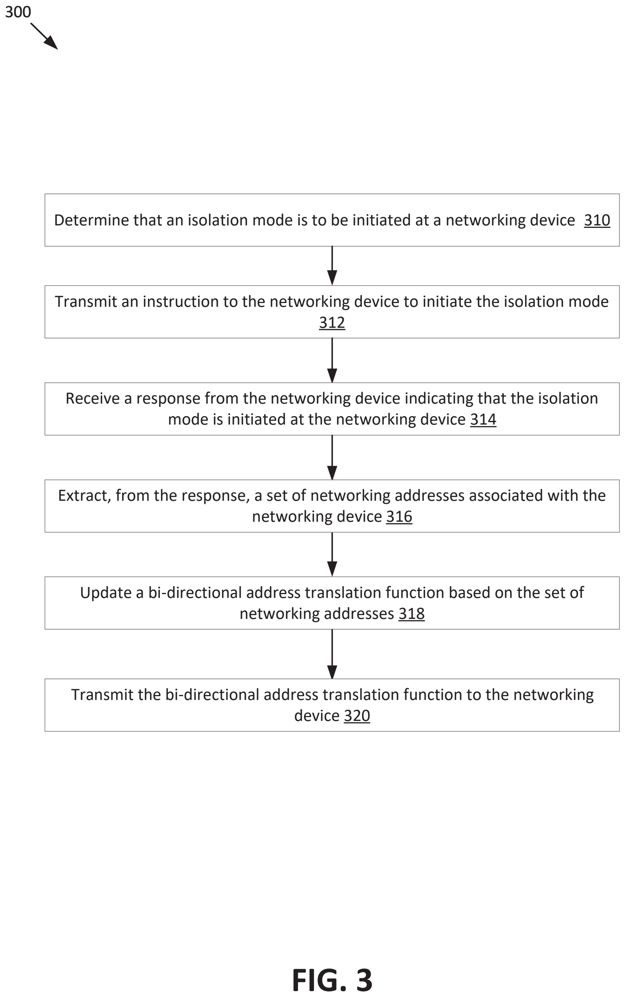

**FIG. 3** illustrates a flow diagram of an example method 300 for stateless address translation in multi-tenant cloud environments, according to at least one embodiment. In some embodiments, method 300 can be performed by computing device(s) 150. For example, one or more operations of method 300 can be performed by one or more components of network controller 152, in some embodiments. Method 300 may be performed by processing logic associated with one or more processing units (e.g., CPUs and/or GPUs), which may include (or communicate with) one or more memory devices. In at least one embodiment, method 300 may be performed by multiple processing threads (e.g., CPU threads and/or GPU threads), each thread executing one or more individual functions, routines, subroutines, or operations of the method. In at least one embodiment, processing threads implementing method 300 may be synchronized (e.g., using semaphores, critical sections, and/or other thread synchronization mechanisms). Alternatively, processing threads implementing method 300 may be executed asynchronously with respect to each other. Processing thread(s) are referred to herein as process logic. Various operations of method 300 may be performed in a different order compared with the order shown in **FIG. 3****.** Some operations of the methods may be performed concurrently with other operations. In at least one embodiment, one or more operations shown in **FIG. 3** may not always be performed.

At block 310, processing logic determines that an isolation mode is to be initiated at a networking device. As described above, an isolation mode refers to an operational state in which the networking device 120 enforces strict network separation between tenants 132 (e.g., tenant 132A and tenant 132B). In some embodiments, device mode component 210 can determine a device mode status 252 for networking device 120 based on a networking protocol of system 100. For example, a developer or operator of system 100 can provide a networking protocol to network controller 152 that indicates that networking devices 120 are to operate in an isolation mode when multiple tenants 132 are initialized at a host system 130 including or otherwise associated with networking device 120. The networking protocol may be a pre-defined security protocol that is applied to each networking device 120 of system 100, in some embodiments. In other or similar embodiments, the networking protocol may be provided or otherwise defined by a host system 130 and/or a tenant 132. In such embodiments, the networking protocol may be additionally or alternatively received from host system 130. In other or similar embodiments, a user device associated with a developer or operator of system 100 (or another device of system 100) can transmit an instruction to network controller 152 indicating a networking device 120 is to operate in isolation mode. In yet other or similar embodiments, network controller 152 may monitor a state or role of each host system 100 and, upon determining that a host system 100 transitions from a provider-controlled state (e.g., for maintenance or imaging) to a tenant-controlled state (e.g., after allocation), network controller 152 can determine that networking device 120 is to operate in isolation mode. Network controller 120 can determine that networking device 120 is to operate in isolation mode in accordance with other technique, for example, upon detecting suspicious activity, changes in tenant assignment, updates to network topology, and so forth. Upon determining that a network device 120 is to operate in isolation mode, device mode component 210 can update a device mode status 252 at memory 250 to indicate that networking device 120 is operating in isolation mode.

At block 312, processing logic transmits an instruction to the networking device to initiate the isolation mode. Upon determining that networking device 120 is to operate in the isolation mode, device mode component 210 can initiate a secure configuration workflow to enforce the isolation state. Device mode component 210 can establish a secure, authenticated communication channel with networking device 120, which ensures that only network controller 152 can issue configuration commands. For example, device mode component 210 can initiate a mutual authentication operation, which involves the exchange of digital certificates, cryptographic keys, or other credentials provisioned during device manufacturing and/or enrollment. Upon determining that the mutual authentication operation is successful (e.g., that the digital certificates, cryptographic keys, or other credentials of controller 152 and device 120 are mutually authenticated), the secure channel is established between controller 152 and device 120.

Upon establishing the secure communication channel, device agent component 212 can transmit an instruction via the secure channel, which may include a payload specifying operational parameters and/or software components involved in secure isolation. For example, the instruction may reference or directly include an image or configuration package for a networking device agent 202 that is to be loaded into processor(s) 122 of networking device 120. Networking device agent 202 may be responsible for enforcing isolation policies and/or managing address translation at networking device 120, as described herein. Upon receiving the instruction, networking device 120 may validate the authenticity and integrity of the networking device agent 202 (e.g., in accordance with a pre-defined authentication and integrity policy) and may load it into its execution environment of processor(s) 122.

As described herein, an agent (e.g., networking device agent 202 and/or other agents) refer to a set of software instructions stored in a non-transitory computer-readable medium and executed by one or more processing devices to perform defined operations. A software agent can include program code, modules, routines, or services that, when executed, carry out particular tasks such as monitoring system events, processing data, communicating with other components, enforcing policies, etc. A software agent can operate autonomously or under direction from another component, and may be implemented using any programming technique in any suitable language or framework. A software agent is not limited to any particular structure beyond executable instructions configured to cause a processing device to perform the recited functionality, and may be embodied as part of an operating system, a virtual machine service, a containerized microservice, or other executable software construct.

In some embodiments, networking device agent 202 may assume exclusive (or at least partial) control over network policy enforcement at networking device 120, blocking any attempts by host system 130 (or any other component of system 100) to modify isolation settings or network configuration. For example, if, after initiation of isolation mode at networking device 120, host system 130 transmits a request to networking device 120 to modify one or more settings of networking device 120, networking device agent 202 may intercept the request and, upon determining that the request was transmitted by host system 130, disregard the request and/or transmit a response to host system 130 indicating that the request is rejected.

At block 314, processing logic receives a response from the networking device indicating that the isolation mode is initiated at the networking device. In some embodiments, networking device agent 202 (i.e., loaded to networking device 120) may obtain a set of networking addresses associated with networking device 120. A networking address associated with networking device 120 refers to a logical identifier assigned to networking device 120 for communication within a network. In some embodiments, a networking address can include an internet protocol (IP) address that identifies networking device 120 as a network endpoint. In other or similar embodiments, a networking address can include a tunnel endpoint address for encapsulating and forwarding tenant traffic across system. As will be seen, a networking address associated with a host address or a tenant address, which is used within the host's or the tenant's logical network domain.

In some embodiments, networking device agent 202 can obtain a set of networking addresses (referred to as networking address(es) 254) associated with networking device 120 in accordance with a networking address assignment protocol (e.g., a dynamic host configuration protocol (DHCP)). A networking address assignment protocol refers to a protocol used to assign networking address and/or other configuration parameters (e.g., subnet mask, default gateway, domain name system (DNS) servers, etc.) to devices 120 on a network. A networking address assignment protocol agent (e.g., a DHCP agent) may run on networking device 120 and/or controller 152 and may be responsible for interacting with a networking address assignment protocol server (e.g., a DHCP server) to obtain configuration information. In some embodiments, networking device agent 202 can act as a networking address assignment protocol agent and transmit a request to the networking address assignment protocol server for the networking address of the networking device 120. In other or similar embodiments, networking device agent 202 can transmit a request to the networking address assignment protocol agent (e.g., residing at networking device 120), which can trigger the networking address assignment protocol agent to request the networking address(es) 254 for the networking device 120 from the networking address assignment protocol server. Network device agent 202 can obtain the networking address(es) 254 in accordance with other techniques (e.g., from a memory buffer 124, etc.). Upon obtaining the networking address(es) 254 associated with networking device 120, networking device agent 202 can transmit the address(es) 254 to controller 152 and/or can use the address(es) 254 to update an address translation function 256, as described below.

At block 316, processing logic extracts, from the response, a set of networking addresses associated with the networking device. As indicated above, in some embodiments, networking device 120 can, optionally, transmit networking address(es) 254 to network controller 152 (e.g., via networking device agent 202). Upon receiving the response, function configuration component 214 of controller 152 can extract the networking address(es) 254 from the response and store the address(es) 254 at memory 250, as illustrated by **FIG. 2****.**

At block 318, processing logic updates a bi-directional address translation function based on the set of networking addresses. Function configuration component 214 at network controller 152 and/or networking device agent 202 at networking device 120 may update the bi-directional address translation function 256, as described herein. As described above, the bi-directional address translation function can translate a given host address to a networking address (e.g., a device address 254) and/or a given networking address to a host address. In some embodiments, the address translation function 256 can include, but is not limited to, a bit masking function, a prefix modification function, or a bit value flipping function. A bit masking function refers to a function that applies a bitwise logical operation between an input value and a mask value to selectively preserve or suppress individual bits of the input value (e.g., the given networking address and/or the given host address). A prefix modification function refers to a function that alters a leading portion (i.e., a prefix) of a digital value, string, or address. A bit value flipping function refers to a function that inverts or toggles one or more bits of a digital value. As described herein, the address translation function 256 is stateless and deterministic which, as provided herein, enables networking device 120 to perform address translation on the fly without maintaining large mapping tables.

In some embodiments, address translation function 256 may include a prefix and/or one or more parameters. Function configuration component 214 and/or networking device agent 202 can update the address translation function 256 to incorporate the networking address(es) 254 and/or a reference to the networking address(es) 254 as the prefix and/or a parameter. In an illustrative example, host system 130 may have an inner IP address of 10.16.100.5 and networking device 120 may have a networking address 254 of 172.16.100.5. The updated address translation function 256 (which references the networking address 254) may replace the first octet of the inner address with the first octet of the networking address 254, or combine the addresses using a deterministic operation, to perform the translation between the networking device address 254 and the host address.

At block 320, processing logic transmits the bi-directional address translation function to the networking device. In some embodiments, function configuration component 214 can transmit the updated address translation function 256 to networking device 120 (e.g., via the secure channel). Networking device agent 202 can store the updated address translation function 256 at memory buffer(s) 124 (e.g., upon receiving the function 256 from network controller 152 and/or upon updating the function 256).

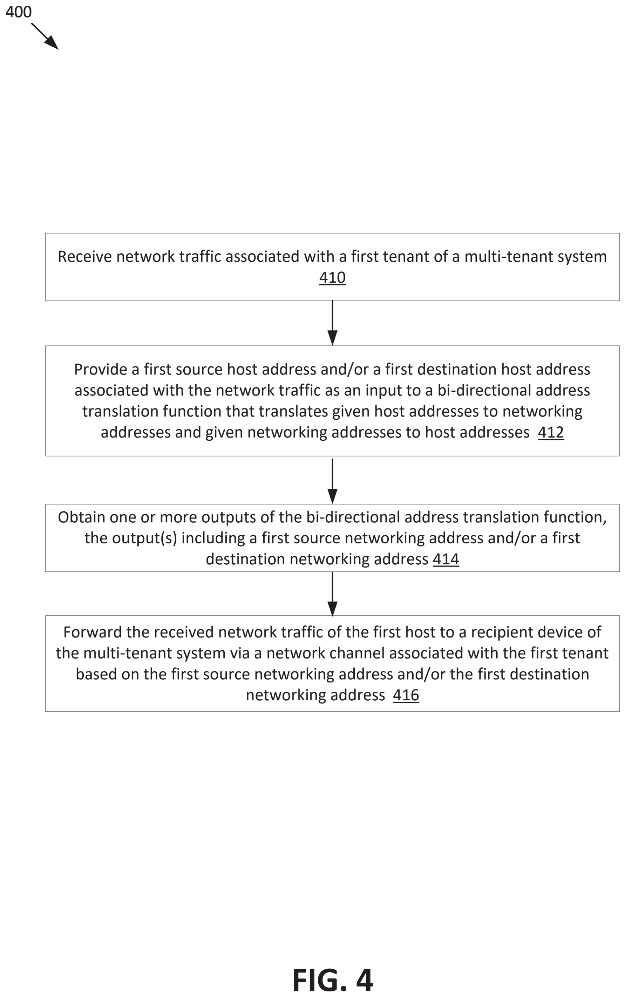

**FIG. 4** illustrates a flow diagram of another example method 400 for stateless address translation in multi-tenant cloud environments, according to at least one embodiment. In some embodiments, method 400 can be performed by networking device 120. For example, one or more operations of method 400 can be performed by one or more components of networking device agent 202, in some embodiments. Method 400 may be performed by processing logic associated with one or more processing units (e.g., CPUs and/or GPUs), which may include (or communicate with) one or more memory devices. In at least one embodiment, method 400 may be performed by multiple processing threads (e.g., CPU threads and/or GPU threads), each thread executing one or more individual functions, routines, subroutines, or operations of the method. In at least one embodiment, processing threads implementing method 400 may be synchronized (e.g., using semaphores, critical sections, and/or other thread synchronization mechanisms). Alternatively, processing threads implementing method 300 may be executed asynchronously with respect to each other. Processing thread(s) are referred to herein as process logic. Various operations of method 400 may be performed in a different order compared with the order shown in **FIG. 4****.** Some operations of the methods may be performed concurrently with other operations. In at least one embodiment, one or more operations shown in **FIG. 4** may not always be performed.

At block 410, processing logic receives network traffic associated with a first tenant of a multi-tenant system. Networking device 120 may receive network traffic associated with the first tenant (e.g., tenant 132A) running via host system 130. In some embodiments, the network traffic may be directed to an application or component that is running via a computing resource of system 100. In other or similar embodiments, the network traffic may be directed to an application or component that is running via a computing resource outside of system 100. In yet other or similar embodiments, the network traffic may be directed to another tenant (e.g., tenant 132B) that is running via host system 130 and/or another host of system 100 and/or another system. The network traffic can include packets or frames that are created by the tenant's virtual interface (e.g., a virtual networking device, such as a vNIC). The packets or frames of the network traffic can include, for example, an ethernet frame (e.g., specifying the tenant's medium access control (MAC) address, the destination MAC address, tags or encapsulation headers, a payload, and so forth), a network layer packet (e.g., including the tenant's IP address, the destination IP address, a protocol identifier, etc.), a transport layer segment (e.g., including a port identifier for the tenant, a destination port identifier, etc.), and/or application data (e.g., including user-level data generated by the tenant's process). In some embodiments, the packets or frames can additionally or alternatively include a destination host address associated with the recipient device for which the network traffic is directed.

At block 412, processing logic provides a first source host address and/or a first destination address associated with the network traffic as an input to a bi-directional address translation function that converts given host addresses to networking addresses and given networking addresses to host addresses. Networking device agent 202 can extract a source host address associated with the tenant 132A and/or a destination host address associated with tenant 132B from the network traffic, in some embodiments. For example, networking device agent 202 may parse or otherwise inspect a header of one or more packets, frames, or segments of the network traffic and identify a host address (e.g., the tenant's MAC address, the tenant's IP address, the tenant's port identifier, etc.) included in the header. Upon identifying the host address(es), networking device agent 202 may provide the identified host address(es) as an input to the bi-directional address translation function 256. As described above, the bi-directional address translation function 256 can translate a given host address to a networking address and a given networking address to a host address.

At block 414, processing logic obtains one or more outputs of the bi-directional address translation function, the output(s) including a first source networking address and/or a first destination networking address. The one or more outputs can include a networking address 254 associated with the networking device 120. In some embodiments, the translated networking address 254 can be a tunnel endpoint IP address (e.g., a tunnel identifier) that is specific to the networking device 120. In accordance with the previous illustrative example, the host address of the network traffic received from tenant 132A may be an inner IP address of 10.1.2.3. Upon providing such address as an input to the bi-directional address translation function, networking device agent 202 may obtain one or more outputs, which includes the translated networking address 254 of 172.16.100.5.

Networking device agent 202 may perform one or more encapsulation operations to encapsulate the translated networking address(es) 254 in the header of the packets, frames, or segments (referred to simply as "packets" herein) of the network traffic. For example, networking device agent 202 can prepend an encapsulation header including the translated networking address(es) 254 to the packets of the network traffic. Such encapsulation header can include, for example, a virtual extensible LAN (VXLAN) header, a generic routing encapsulation (GRE) header, a generic network virtualization encapsulation (e.g., Geneve) header, and so forth. In another example, networking device agent 202 can replace a header containing the host address indicated by the packets of the network traffic with an encapsulation header including the translated networking address(es) 254. The encapsulation header included in the packets can include a tenant-specific identifier (e.g., a VXLAN network identifier, a VLAN tag, an overlay network tag, etc.) that enables networking device 120 to maintain logical separation of network traffic across tenants 132, as described below.

At block 416, processing logic forwards the received network traffic of the first tenant to a recipient device of the multi-tenant system via a network channel associated with the first tenant based on the first source networking address and the first destination networking address, in view of the device used. In some embodiments, networking device agent 202, or another component or agent of networking device 202, can identify a queue 204A allocated to tenant 132A (e.g., during an initialization process) and can store the packet(s) including the encapsulated header (referred to herein as "encapsulated packets") at the identified queue 204A. Each queue 204A can be associated with a particular channel interface 126A that is allocated to transmit network traffic associated with tenant 132A (e.g., during the initialization process). Networking device 120 can transmit encapsulated packets of queue 204A to a recipient device via the channel interface 126A (e.g., in accordance with a packet transmission protocol associated with queue 204A, tenant 132A, and/or system 100).

As the encapsulated packet(s) traverse shared network infrastructure of system 100, intermediate networking devices (e.g., switches, routers, etc.) may forward the network traffic based on the networking address 254 included in the encapsulation header, while the tenant-specific identifier remains intact within the encapsulation header. When the network traffic reaches its destination (e.g., the recipient device), the recipient device can examine the encapsulation header, extract the tenant-specific identifier, and use it to determine the logical network or tenant context associated with the network traffic. The recipient device may decapsulate the packet and deliver it only to the appropriate host or network segment associated with the tenant. Accordingly, embodiments described herein ensure that, even though multiple tenants' traffic may share the same networking device 120 (e.g., see tenant 132A and 132B of FIG. 2) and traverse the same intermediate network devices, the network infrastructure can reliably distinguish and enforce isolation for each tenant's traffic based on the embedded tenant-specific identifier. Accordingly, tenant traffic remains logically separated, preventing cross tenant access or leakage and enabling secure, scalable multi-tenancy over shared network resources.

In some embodiments, networking device 120 can receive network traffic that is directed to tenant 132A and/or tenant 132B. For example, networking device 120 may receive the network traffic via one or more of channel interface 126A or channel interface 126B and, upon receiving the network traffic, store the network traffic at one or more of queues 204A or 204B. Networking device agent 202 can extract a networking address 254 from one or more packet of the received network traffic and can provide the extracted networking address 254 as an input to the bi-directional address translation function 256. Networking device agent 202 can obtain one or more outputs of the bi-directional address translation function 256 and can extract, from the one or more outputs, a host address associated with the tenant (e.g., 132A, 132B) that is the recipient of the network traffic. Networking device 120 can transmit the network traffic to the tenant 132A, 132B associated with the host address, in some embodiments.

As described herein, networking device agent 202 can additionally or alternatively collect telemetry data reflecting a state of hardware, software, firmware, etc. of networking device 120. The telemetry data 258 can include or otherwise reflect a number of packets and bytes transmitted and received, error counts (e.g., dropped packets, CRC errors, malformed frames, etc.), flow-level information (e.g., a number of active connections or sessions handled by networking device 120 during a particular time period), and so forth. Telemetry data 258 can additionally or alternatively indicate protocol-specific events including a number of ARP or DHCP requests processed, tunnel encapsulation and decapsulation counts, per-tenant or per-queue utilization metrics, and so forth. Networking device agent 202 can transmit telemetry data 258 to network controller 152 (e.g., via the secure communication channel described above). Networking device agent 202 may transmit telemetry data 258 to network controller 152 in real-time (e.g., as the telemetry data 258 is collected) and/or in accordance at a pre-defined interval (e.g., of a data transmission protocol provided by a developer or operator of system 100 and/or determined based on historical or experimental data associated with system 100). Device telemetry component 218 of network controller 152 can receive the telemetry data 258 from networking device 120 and can store the telemetry data 258 at memory 250, as illustrated by FIG. 2. Network controller 152 (or another component of system 100) may use the received telemetry data 258 to perform operations associated with monitoring, troubleshooting, and/or optimizing network performance and security of system 100.

### INFERENCE AND TRAINING LOGIC

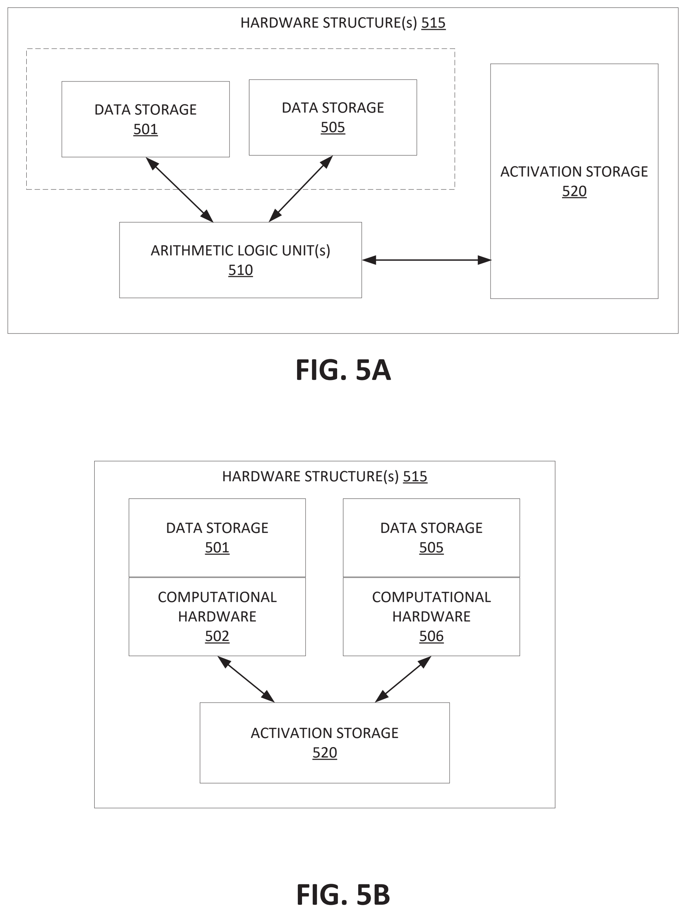

**FIG. 5A** illustrates inference and/or training logic 515 used to perform inferencing and/or training operations associated with one or more embodiments, such as with regards to an artificial intelligence (AI) model that generates animation data from audio data. Details regarding inference and/or training logic 515 are provided below in conjunction with **FIGS. 5A** **and/or 5B.**

In at least one embodiment, inference and/or training logic 515 may include, without limitation, code and/or data storage 501 to store forward and/or output weight and/or input/output data, and/or other parameters to configure neurons or layers of a neural network trained and/or used for inferencing in aspects of one or more embodiments. In at least one embodiment, training logic 515 may include, or be coupled to code and/or data storage 501 to store graph code or other software to control timing and/or order, in which weight and/or other parameter information is to be loaded to configure, logic, including integer and/or floating point units (collectively, arithmetic logic units (ALUs). In at least one embodiment, code, such as graph code, loads weight or other parameter information into processor ALUs based on an architecture of a neural network to which the code corresponds. In at least one embodiment, code and/or data storage 501 stores weight parameters and/or input/output data of each layer of a neural network trained or used in conjunction with one or more embodiments during forward propagation of input/output data and/or weight parameters during training and/or inferencing using aspects of one or more embodiments. In at least one embodiment, any portion of code and/or data storage 501 may be included with other on-chip or off-chip data storage, including a processor's L1, L2, or L3 cache or system memory.

In at least one embodiment, any portion of code and/or data storage 501 may be internal or external to one or more processors or other hardware logic devices or circuits. In at least one embodiment, code and/or code and/or data storage 501 may be cache memory, dynamic randomly addressable memory ("DRAM"), static randomly addressable memory ("SRAM"), non-volatile memory (e.g., Flash memory), or other storage. In at least one embodiment, choice of whether code and/or code and/or data storage 501 is internal or external to a processor, for example, or comprised of DRAM, SRAM, Flash or some other storage type may depend on available storage on-chip versus off-chip, latency requirements of training and/or inferencing functions being performed, batch size of data used in inferencing and/or training of a neural network, or some combination of these factors.

In at least one embodiment, inference and/or training logic 515 may include, without limitation, a code and/or data storage 505 to store backward and/or output weight and/or input/output data corresponding to neurons or layers of a neural network trained and/or used for inferencing in aspects of one or more embodiments. In at least one embodiment, code and/or data storage 505 stores weight parameters and/or input/output data of each layer of a neural network trained or used in conjunction with one or more embodiments during backward propagation of input/output data and/or weight parameters during training and/or inferencing using aspects of one or more embodiments. In at least one embodiment, training logic 515 may include, or be coupled to code and/or data storage 505 to store graph code or other software to control timing and/or order, in which weight and/or other parameter information is to be loaded to configure, logic, including integer and/or floating point units (collectively, arithmetic logic units (ALUs). In at least one embodiment, code, such as graph code, loads weight or other parameter information into processor ALUs based on an architecture of a neural network to which the code corresponds. In at least one embodiment, any portion of code and/or data storage 505 may be included with other on-chip or off-chip data storage, including a processor's L1, L2, or L3 cache or system memory. In at least one embodiment, any portion of code and/or data storage 505 may be internal or external to on one or more processors or other hardware logic devices or circuits. In at least one embodiment, code and/or data storage 505 may be cache memory, DRAM, SRAM, non-volatile memory (e.g., Flash memory), or other storage. In at least one embodiment, choice of whether code and/or data storage 505 is internal or external to a processor, for example, or comprised of DRAM, SRAM, Flash or some other storage type may depend on available storage on-chip versus off-chip, latency requirements of training and/or inferencing functions being performed, batch size of data used in inferencing and/or training of a neural network, or some combination of these factors.

In at least one embodiment, code and/or data storage 501 and code and/or data storage 505 may be separate storage structures. In at least one embodiment, code and/or data storage 501 and code and/or data storage 505 may be same storage structure. In at least one embodiment, code and/or data storage 501 and code and/or data storage 505 may be partially same storage structure and partially separate storage structures. In at least one embodiment, any portion of code and/or data storage 501 and code and/or data storage 505 may be included with other on-chip or off-chip data storage, including a processor's L1, L2, or L3 cache or system memory.

In at least one embodiment, inference and/or training logic 515 may include, without limitation, one or more arithmetic logic unit(s) ("ALU(s)") 510, including integer and/or floating point units, to perform logical and/or mathematical operations based, at least in part on, or indicated by, training and/or inference code (e.g., graph code), a result of which may produce activations (e.g., output values from layers or neurons within a neural network) stored in an activation storage 520 that are functions of input/output and/or weight parameter data stored in code and/or data storage 501 and/or code and/or data storage 505. In at least one embodiment, activations stored in activation storage 520 are generated according to linear algebraic and or matrix-based mathematics performed by ALU(s) 510 in response to performing instructions or other code, wherein weight values stored in code and/or data storage 505 and/or code and/or data storage 501 are used as operands along with other values, such as bias values, gradient information, momentum values, or other parameters or hyperparameters, any or all of which may be stored in code and/or data storage 505 or code and/or data storage 501 or another storage on or off-chip.

In at least one embodiment, ALU(s) 510 are included within one or more processors or other hardware logic devices or circuits, whereas in another embodiment, ALU(s) 510 may be external to a processor or other hardware logic device or circuit that uses them (e.g., a coprocessor). In at least one embodiment, ALUs 510 may be included within a processor's execution units or otherwise within a bank of ALUs accessible by a processor's execution units either within same processor or distributed between different processors of different types (e.g., central processing units, graphics processing units, fixed function units, etc.). In at least one embodiment, code and/or data storage 501, code and/or data storage 505, and activation storage 520 may be on same processor or other hardware logic device or circuit, whereas in another embodiment, they may be in different processors or other hardware logic devices or circuits, or some combination of same and different processors or other hardware logic devices or circuits. In at least one embodiment, any portion of activation storage 520 may be included with other on-chip or off-chip data storage, including a processor's L1, L2, or L3 cache or system memory. Furthermore, inferencing and/or training code may be stored with other code accessible to a processor or other hardware logic or circuit and fetched and/or processed using a processor's fetch, decode, scheduling, execution, retirement and/or other logical circuits.

In at least one embodiment, activation storage 520 may be cache memory, DRAM, SRAM, non-volatile memory (e.g., Flash memory), or other storage. In at least one embodiment, activation storage 520 may be completely or partially within or external to one or more processors or other logical circuits. In at least one embodiment, choice of whether activation storage 520 is internal or external to a processor, for example, or comprised of DRAM, SRAM, Flash or some other storage type may depend on available storage on-chip versus off-chip, latency requirements of training and/or inferencing functions being performed, batch size of data used in inferencing and/or training of a neural network, or some combination of these factors. In at least one embodiment, inference and/or training logic 515 illustrated in FIG. 5A may be used in conjunction with an application-specific integrated circuit ("ASIC"), such as Tensorflow^{®} Processing Unit from Google, an inference processing unit (IPU) from Graphcore^{™}, or a Nervana^{®} (e.g., "Lake Crest") processor from Intel Corp. In at least one embodiment, inference and/or training logic 515 illustrated in FIG. 5A may be used in conjunction with central processing unit ("CPU") hardware, graphics processing unit ("GPU") hardware or other hardware, such as data processing unit ("DPU") hardware, or field programmable gate arrays ("FPGAs").

**FIG. 5B** illustrates inference and/or training logic 515, according to at least one or more embodiments. In at least one embodiment, inference and/or training logic 515 may include, without limitation, hardware logic in which computational resources are dedicated or otherwise exclusively used in conjunction with weight values or other information corresponding to one or more layers of neurons within a neural network. In at least one embodiment, inference and/or training logic 515 illustrated in FIG. 5B may be used in conjunction with an application-specific integrated circuit (ASIC), such as Tensorflow^{®} Processing Unit from Google, an inference processing unit (IPU) from Graphcore^{™}, or a Nervana^{®} (e.g., "Lake Crest") processor from Intel Corp. In at least one embodiment, inference and/or training logic 515 illustrated in FIG. 5B may be used in conjunction with central processing unit (CPU) hardware, graphics processing unit (GPU) hardware or other hardware, such as data processing unit ("DPU") hardware, or field programmable gate arrays (FPGAs). In at least one embodiment, inference and/or training logic 515 includes, without limitation, code and/or data storage 501 and code and/or data storage 505, which may be used to store code (e.g., graph code), weight values and/or other information, including bias values, gradient information, momentum values, and/or other parameter or hyperparameter information. In at least one embodiment illustrated in FIG. 5B, each of code and/or data storage 501 and code and/or data storage 505 is associated with a dedicated computational resource, such as computational hardware 502 and computational hardware 506, respectively. In at least one embodiment, each of computational hardware 502 and computational hardware 506 comprises one or more ALUs that perform mathematical functions, such as linear algebraic functions, only on information stored in code and/or data storage 501 and code and/or data storage 505, respectively, result of which is stored in activation storage 520.

In at least one embodiment, each of code and/or data storage 501 and 505 and corresponding computational hardware 502 and 506, respectively, correspond to different layers of a neural network, such that resulting activation from one "storage/computational pair 501 /502" of code and/or data storage 501 and computational hardware 502 is provided as an input to "storage/computational pair 505 /506" of code and/or data storage 505 and computational hardware 506, in order to mirror conceptual organization of a neural network. In at least one embodiment, each of storage/computational pairs 501 /502 and 505 /506 may correspond to more than one neural network layer. In at least one embodiment, additional storage/computation pairs (not shown) subsequent to or in parallel with storage computation pairs 501 /502 and 505 /506 may be included in inference and/or training logic 515.

### DATA CENTER

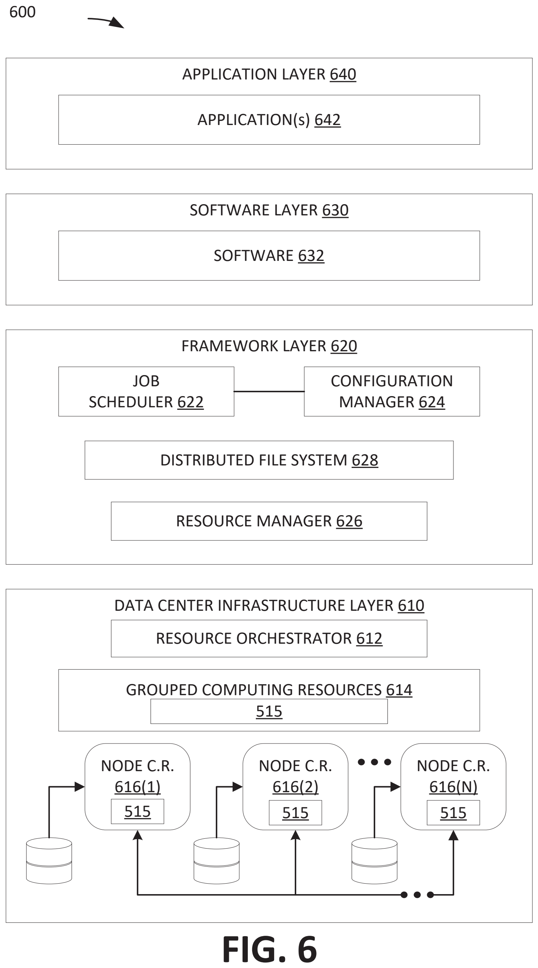

**FIG. 6** illustrates an example data center 600, in which at least one embodiment may be used. For example, the data center 600 may house server device 160, data store 150 and/or computing device 102 of FIG. 1 in embodiments. In at least one embodiment, data center 600 includes a data center infrastructure layer 610, a framework layer 620, a software layer 630, and an application layer 640.

In at least one embodiment, as shown in **FIG. 6****,** data center infrastructure layer 610 may include a resource orchestrator 612, grouped computing resources 614, and node computing resources ("node C.R.s") 616(1)-1016(N), where "N" represents any whole, positive integer. In at least one embodiment, node C.R.s 616(1)-1016(N) may include, but are not limited to, any number of central processing units ("CPUs") or other processors (including accelerators, field programmable gate arrays (FPGAs), data processing units, graphics processors, etc.), memory devices (e.g., dynamic read-only memory), storage devices (e.g., solid state or disk drives), network input/output ("NW I/O") devices, network switches, virtual machines ("VMs"), power modules, and cooling modules, etc. In at least one embodiment, one or more node C.R.s from among node C.R.s 616(1)-1016(N) may be a server having one or more of above-mentioned computing resources.

In at least one embodiment, grouped computing resources 614 may include separate groupings of node C.R.s housed within one or more racks (not shown), or many racks housed in data centers at various geographical locations (also not shown). Separate groupings of node C.R.s within grouped computing resources 614 may include grouped compute, network, memory or storage resources that may be configured or allocated to support one or more workloads. In at least one embodiment, several node C.R.s including CPUs or processors may grouped within one or more racks to provide compute resources to support one or more workloads. In at least one embodiment, one or more racks may also include any number of power modules, cooling modules, and network switches, in any combination.

In at least one embodiment, resource orchestrator 612 may configure or otherwise control one or more node C.R.s 616(1)-1016(N) and/or grouped computing resources 614. In at least one embodiment, resource orchestrator 612 may include a software design infrastructure ("SDI") management entity for data center 600. In at least one embodiment, resource orchestrator may include hardware, software or some combination thereof.

In at least one embodiment, as shown in **FIG. 6****,** framework layer 620 includes a job scheduler 622, a configuration manager 624, a resource manager 626 and a distributed file system 628. In at least one embodiment, framework layer 620 may include a framework to support software 632 of software layer 630 and/or one or more application(s) 642 of application layer 640. In at least one embodiment, software 632 or application(s) 642 may respectively include web-based service software or applications, such as those provided by Amazon Web Services, Google Cloud and Microsoft Azure. In at least one embodiment, framework layer 620 may be, but is not limited to, a type of free and open-source software web application framework such as Apache SparkTM (hereinafter "Spark") that may utilize distributed file system 628 for large-scale data processing (e.g., "big data"). In at least one embodiment, job scheduler 622 may include a Spark driver to facilitate scheduling of workloads supported by various layers of data center 600. In at least one embodiment, configuration manager 624 may be capable of configuring different layers such as software layer 630 and framework layer 620 including Spark and distributed file system 628 for supporting large-scale data processing. In at least one embodiment, resource manager 626 may be capable of managing clustered or grouped computing resources mapped to or allocated for support of distributed file system 628 and job scheduler 622. In at least one embodiment, clustered or grouped computing resources may include grouped computing resource 614 at data center infrastructure layer 610. In at least one embodiment, resource manager 626 may coordinate with resource orchestrator 612 to manage these mapped or allocated computing resources.

In at least one embodiment, software 632 included in software layer 630 may include software used by at least portions of node C.R.s 616(1)-1016(N), grouped computing resources 614, and/or distributed file system 628 of framework layer 620. The one or more types of software may include, but are not limited to, Internet web page search software, e-mail virus scan software, database software, and streaming video content software.

In at least one embodiment, application(s) 642 included in application layer 640 may include one or more types of applications used by at least portions of node C.R.s 616(1)-1016(N), grouped computing resources 614, and/or distributed file system 628 of framework layer 620. One or more types of applications may include, but are not limited to, any number of a genomics application, a cognitive compute, and a machine learning application, including training or inferencing software, machine learning framework software (e.g., PyTorch, TensorFlow, Caffe, etc.) or other machine learning applications used in conjunction with one or more embodiments.

In at least one embodiment, any of configuration manager 624, resource manager 626, and resource orchestrator 612 may implement any number and type of self-modifying actions based on any amount and type of data acquired in any technically feasible fashion. In at least one embodiment, self-modifying actions may relieve a data center operator of data center 600 from making possibly bad configuration decisions and possibly avoiding underutilized and/or poor performing portions of a data center.

In at least one embodiment, data center 600 may include tools, services, software, or other resources to train one or more machine learning models or predict or infer information using one or more machine learning models according to one or more embodiments described herein. For example, in at least one embodiment, a machine learning model may be trained by calculating weight parameters according to a neural network architecture using software and computing resources described above with respect to data center 600. In at least one embodiment, trained machine learning models corresponding to one or more neural networks may be used to infer or predict information using resources described above with respect to data center 600 by using weight parameters calculated through one or more training techniques described herein.

In at least one embodiment, data center may use CPUs, application-specific integrated circuits (ASICs), GPUs, DPUs FPGAs, or other hardware to perform training and/or inferencing using above-described resources. Moreover, one or more software and/or hardware resources described above may be configured as a service to allow users to train or performing inferencing of information, such as image recognition, speech recognition, or other artificial intelligence services.

Inference and/or training logic 515 are used to perform inferencing and/or training operations associated with one or more embodiments. Details regarding inference and/or training logic 515 are provided below in conjunction with FIGs. 5A and/or 5B. In at least one embodiment, inference and/or training logic 515 may be used in system FIG. 6 for inferencing or predicting operations based, at least in part, on weight parameters calculated using neural network training operations, neural network functions and/or architectures, or neural network use cases described herein.

Such components may be used to generate synthetic data imitating failure cases in a network training process, which may help to improve performance of the network while limiting the amount of synthetic data to avoid overfitting.

### COMPUTER SYSTEMS

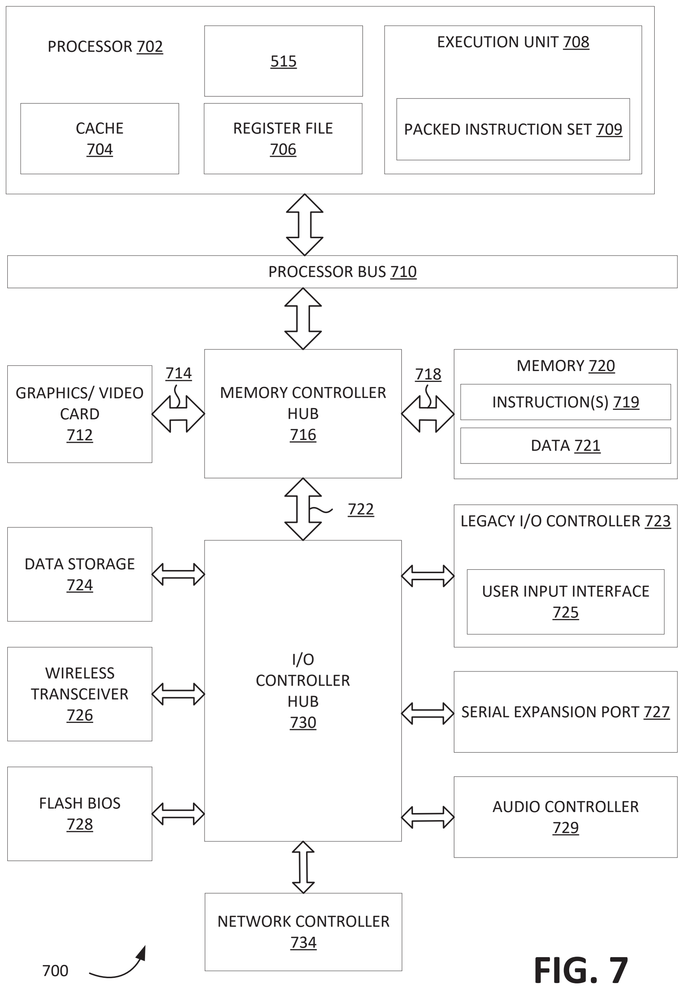

**FIG. 7** is a block diagram illustrating an exemplary computer system 700, which may be a system with interconnected devices and components, a system-on-a-chip (SOC) or some combination thereof 700 formed with a processor that may include execution units to execute an instruction, according to at least one embodiment. In some embodiments, the computer system 700 can correspond to server device 160 and/or computing device 102 of FIG. 1. In at least one embodiment, computer system 700 may include, without limitation, a component, such as a processor 702 to employ execution units including logic to perform algorithms for process data, in accordance with present disclosure, such as in embodiment described herein. For example, processor 702 can be configured to execute instructions for implementing streaming and playback of synchronized audio and animation data. In at least one embodiment, computer system 700 may include processors, such as PENTIUM^{®} Processor family, XeonTM, Itanium^{®}, XScaleTM and/or StrongARMTM, Intel^{®} Core^{™}, or Intel^{®} Nervana^{™} microprocessors available from Intel Corporation of Santa Clara, California, although other systems (including PCs having other microprocessors, engineering workstations, set-top boxes and like) may also be used. In at least one embodiment, computer system 700 may execute a version of WINDOWS' operating system available from Microsoft Corporation of Redmond, Wash., although other operating systems (UNIX and Linux for example), embedded software, and/or graphical user interfaces, may also be used.

Embodiments may be used in other devices such as handheld devices and embedded applications. Some examples of handheld devices include cellular phones, Internet Protocol devices, digital cameras, personal digital assistants ("PDAs"), and handheld PCs. In at least one embodiment, embedded applications may include a microcontroller, a digital signal processor ("DSP"), system on a chip, network computers ("NetPCs"), set-top boxes, network hubs, wide area network ("WAN") switches, edge devices, Internet-of-Things ("IoT") devices, or any other system that may perform one or more instructions in accordance with at least one embodiment.

In at least one embodiment, computer system 700 may include, without limitation, processor 702 that may include, without limitation, one or more execution units 708 to perform machine learning model training and/or inferencing according to techniques described herein. In at least one embodiment, computer system 700 is a single processor desktop or server system, but in another embodiment computer system 700 may be a multiprocessor system. In at least one embodiment, processor 702 may include, without limitation, a complex instruction set computer ("CISC") microprocessor, a reduced instruction set computing ("RISC") microprocessor, a very long instruction word ("VLIW") microprocessor, a processor implementing a combination of instruction sets, or any other processor device, such as a digital signal processor, for example. In at least one embodiment, processor 702 may be coupled to a processor bus 710 that may transmit data signals between processor 702 and other components in computer system 700.

In at least one embodiment, processor 702 may include, without limitation, a Level 1 ("L1") internal cache memory ("cache") 704. In at least one embodiment, processor 702 may have a single internal cache or multiple levels of internal cache. In at least one embodiment, cache memory may reside externally to processor 702. Other embodiments may also include a combination of both internal and external caches depending on particular implementation and needs. In at least one embodiment, register file 706 may store different types of data in various registers including, without limitation, integer registers, floating point registers, status registers, and instruction pointer register.

In at least one embodiment, execution unit 708, including, without limitation, logic to perform integer and floating point operations, also resides in processor 702. In at least one embodiment, processor 702 may also include a microcode ("ucode") read only memory ("ROM") that stores microcode for certain macro instructions. In at least one embodiment, execution unit 708 may include logic to handle a packed instruction set 709. In at least one embodiment, by including packed instruction set 709 in an instruction set of a general-purpose processor 702, along with associated circuitry to execute instructions, operations used by many multimedia applications may be performed using packed data in a general-purpose processor 702. In one or more embodiments, many multimedia applications may be accelerated and executed more efficiently by using full width of a processor's data bus for performing operations on packed data, which may eliminate need to transfer smaller units of data across processor's data bus to perform one or more operations one data element at a time.

In at least one embodiment, execution unit 708 may also be used in microcontrollers, embedded processors, graphics devices, DSPs, and other types of logic circuits. In at least one embodiment, computer system 700 may include, without limitation, a memory 720. In at least one embodiment, memory 720 may be implemented as a Dynamic Random Access Memory ("DRAM") device, a Static Random Access Memory ("SRAM") device, flash memory device, or other memory device. In at least one embodiment, memory 720 may store instruction(s) 719 and/or data 721 represented by data signals that may be executed by processor 702.

In at least one embodiment, system logic chip may be coupled to processor bus 710 and memory 720. In at least one embodiment, system logic chip may include, without limitation, a memory controller hub ("MCH") 716, and processor 702 may communicate with MCH 716 via processor bus 710. In at least one embodiment, MCH 716 may provide a high bandwidth memory path 718 to memory 720 for instruction and data storage and for storage of graphics commands, data and textures. In at least one embodiment, MCH 716 may direct data signals between processor 702, memory 720, and other components in computer system 700 and to bridge data signals between processor bus 710, memory 720, and a system I/O 722. In at least one embodiment, system logic chip may provide a graphics port for coupling to a graphics controller. In at least one embodiment, MCH 716 may be coupled to memory 720 through a high bandwidth memory path 718 and graphics/video card 712 may be coupled to MCH 716 through an Accelerated Graphics Port ("AGP") interconnect 714.

In at least one embodiment, computer system 700 may use system I/O 722 that is a proprietary hub interface bus to couple MCH 716 to I/O controller hub ("ICH") 730. In at least one embodiment, ICH 730 may provide direct connections to some I/O devices via a local I/O bus. In at least one embodiment, local I/O bus may include, without limitation, a high-speed I/O bus for connecting peripherals to memory 720, chipset, and processor 702. Examples may include, without limitation, an audio controller 729, a firmware hub ("flash BIOS") 728, a wireless transceiver 726, a data storage 724, a legacy I/O controller 723 containing user input and keyboard interfaces 725, a serial expansion port 727, such as Universal Serial Bus ("USB"), and a network controller 734, which may include in some embodiments, a data processing unit. Data storage 724 may comprise a hard disk drive, a floppy disk drive, a CD-ROM device, a flash memory device, or other mass storage device.

In at least one embodiment, FIG. 7 illustrates a system, which includes interconnected hardware devices or "chips", whereas in other embodiments, FIG. 7 may illustrate an exemplary System on a Chip ("SoC"). In at least one embodiment, devices may be interconnected with proprietary interconnects, standardized interconnects (e.g., PCIe) or some combination thereof. In at least one embodiment, one or more components of computer system 700 are interconnected using compute express link (CXL) interconnects.

Inference and/or training logic 515 are used to perform inferencing and/or training operations associated with one or more embodiments. Details regarding inference and/or training logic 515 are provided below in conjunction with FIGS. 5A and/or B. In at least one embodiment, inference and/or training logic 515 may be used in system FIG. 7 for inferencing or predicting operations based, at least in part, on weight parameters calculated using neural network training operations, neural network functions and/or architectures, or neural network use cases described herein.

Such components may be used to generate synthetic data imitating failure cases in a network training process, which may help to improve performance of the network while limiting the amount of synthetic data to avoid overfitting.

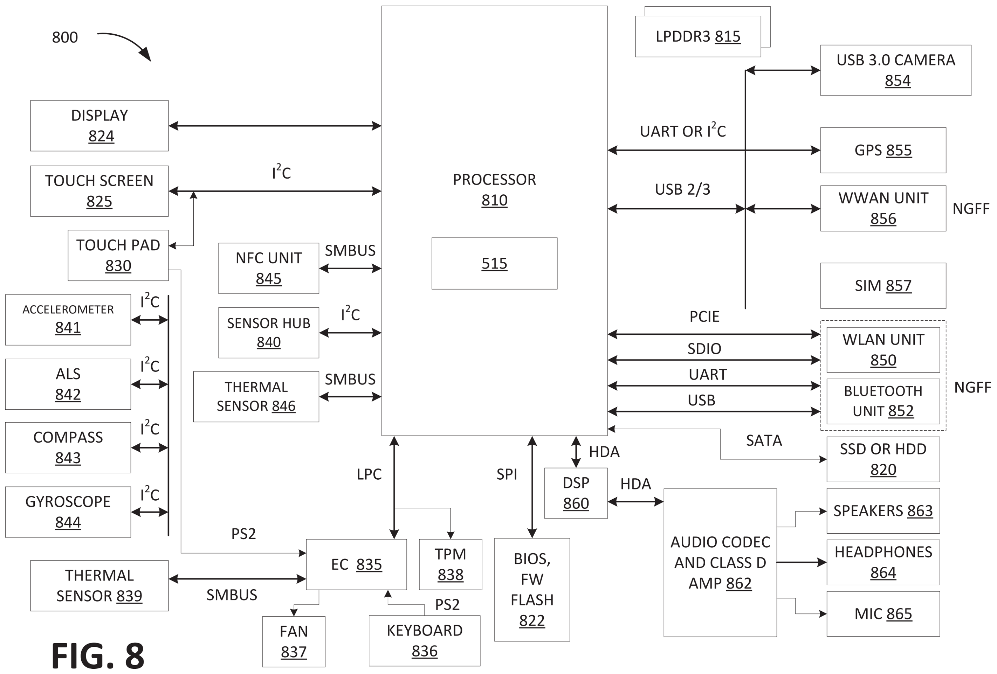

**FIG. 8** is a block diagram illustrating an electronic device 800 for utilizing a processor 810, according to at least one embodiment. In at least one embodiment, electronic device 800 may be, for example and without limitation, a notebook, a tower server, a rack server, a blade server, a laptop, a desktop, a tablet, a mobile device, a phone, an embedded computer, an edge device, an IoT device, or any other suitable electronic device. For example, electronic device 800 can correspond to computing device 102 and/or server device 160 of FIG. 1.

In at least one embodiment, system 800 may include, without limitation, processor 810 communicatively coupled to any suitable number or kind of components, peripherals, modules, or devices. In at least one embodiment, processor810 coupled using a bus or interface, such as a 1°C bus, a System Management Bus ("SMBus"), a Low Pin Count (LPC) bus, a Serial Peripheral Interface ("SPI"), a High Definition Audio ("HDA") bus, a Serial Advance Technology Attachment ("SATA") bus, a Universal Serial Bus ("USB") (versions 1, 2, 3), or a Universal Asynchronous Receiver/Transmitter ("UART") bus. In at least one embodiment, FIG. 8 illustrates a system, which includes interconnected hardware devices or "chips", whereas in other embodiments, FIG. 8 may illustrate an exemplary System on a Chip ("SoC"). In at least one embodiment, devices illustrated in FIG. 8 may be interconnected with proprietary interconnects, standardized interconnects (e.g., PCIe) or some combination thereof. In at least one embodiment, one or more components of FIG. 8 are interconnected using compute express link (CXL) interconnects.

In at least one embodiment, FIG. 8 may include a display 824, a touch screen 825, a touch pad 830, a Near Field Communications unit ("NFC") 845, a sensor hub 840, a thermal sensor 846, an Express Chipset ("EC") 835, a Trusted Platform Module ("TPM") 838, BIOS/firmware/flash memory ("BIOS, FW Flash") 822, a DS P860, a drive 820 such as a Solid State Disk ("SSD") or a Hard Disk Drive ("HDD"), a wireless local area network unit ("WLAN") 850, a Bluetooth unit 852, a Wireless Wide Area Network unit ("WWAN") 856, a Global Positioning System (GPS) 855, a camera ("USB 3.0 camera") 854 such as a USB 3.0 camera, and/or a Low Power Double Data Rate ("LPDDR") memory unit ("LPDDR3") 815 implemented in, for example, LPDDR3 standard. These components may each be implemented in any suitable manner.

In at least one embodiment, other components may be communicatively coupled to processor 810 through components discussed above. In at least one embodiment, an accelerometer 841, Ambient Light Sensor ("ALS") 842, compass 843, and a gyroscope 844 may be communicatively coupled to sensor hub 840. In at least one embodiment, thermal sensor 839, a fan 837, a keyboard 836, and a touch pad 830 may be communicatively coupled to EC 835. In at least one embodiment, speaker 863, headphones 864, and microphone ("mic") 865 may be communicatively coupled to an audio unit ("audio codec and class d amp") 862, which may in turn be communicatively coupled to DSP 860. In at least one embodiment, audio unit 864 may include, for example and without limitation, an audio coder/decoder ("codec") and a class D amplifier. In at least one embodiment, SIM card ("SIM") 857 may be communicatively coupled to WWAN unit 856. In at least one embodiment, components such as WLAN unit 850 and Bluetooth unit 852, as well as WWAN unit 856 may be implemented in a Next Generation Form Factor ("NGFF").

Inference and/or training logic 515 are used to perform inferencing and/or training operations associated with one or more embodiments. Details regarding inference and/or training logic 515 are provided below in conjunction with FIGs. 5A and/or 5B. In at least one embodiment, inference and/or training logic 515 may be used in system FIG.8 for inferencing or predicting operations based, at least in part, on weight parameters calculated using neural network training operations, neural network functions and/or architectures, or neural network use cases described herein.

Such components may be used to generate synthetic data imitating failure cases in a network training process, which may help to improve performance of the network while limiting the amount of synthetic data to avoid overfitting.

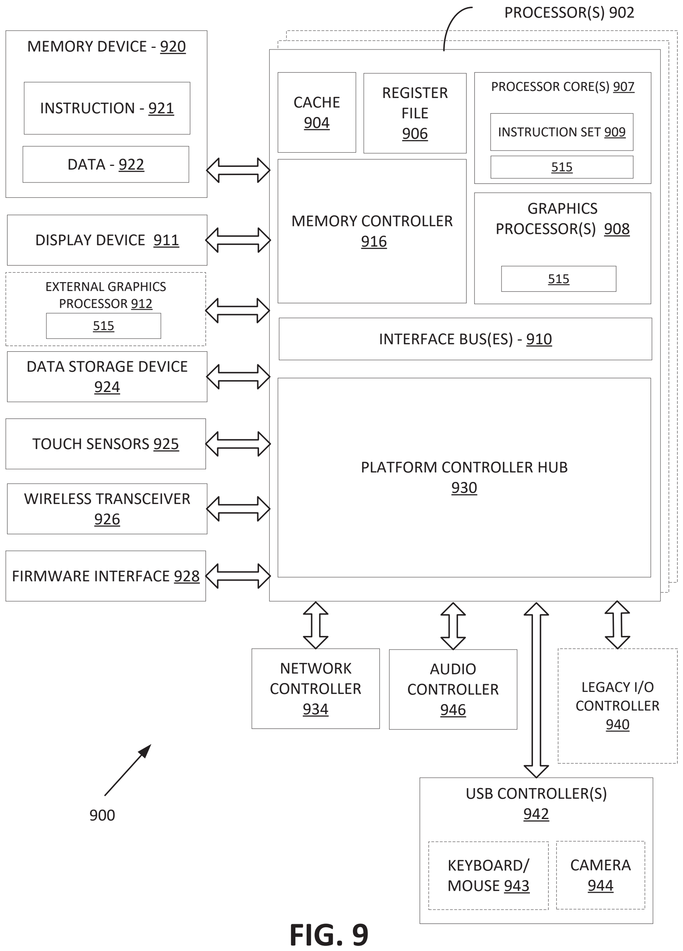

**FIG. 9** is a block diagram of a processing system 900, according to at least one embodiment. For example, processing system 900 can correspond to server device 160, data store 150, and/or computing device 102 of FIG. 1 in embodiments. In at least one embodiment, system 900 includes one or more processors 902 and one or more graphics processors 908, and may be a single processor desktop system, a multiprocessor workstation system, or a server system having a large number of processors 902 or processor cores 907. In at least one embodiment, system 900 is a processing platform incorporated within a system-on-a-chip (SoC) integrated circuit for use in mobile, handheld, edge, or embedded devices.

In at least one embodiment, system 900 may include, or be incorporated within a server-based gaming platform, a game console, including a game and media console, a mobile gaming console, a handheld game console, or an online game console. In at least one embodiment, system 900 is a mobile phone, smart phone, tablet computing device or mobile Internet device. In at least one embodiment, processing system 900 may also include, couple with, or be integrated within a wearable device, such as a smart watch wearable device, smart eyewear device, augmented reality device, or virtual reality device. In at least one embodiment, processing system 900 is a television or set top box device having one or more processors 902 and a graphical interface generated by one or more graphics processors 908.

In at least one embodiment, one or more processors 902 each include one or more processor cores 907 to process instructions which, when executed, perform operations for system and user software. In at least one embodiment, each of one or more processor cores 907 is configured to process a specific instruction set 909. In at least one embodiment, instruction set 909 may facilitate Complex Instruction Set Computing (CISC), Reduced Instruction Set Computing (RISC), or computing via a Very Long Instruction Word (VLIW). In at least one embodiment, processor cores 907 may each process a different instruction set 909, which may include instructions to facilitate emulation of other instruction sets. In at least one embodiment, processor core 907 may also include other processing devices, such a Digital Signal Processor (DSP).

In at least one embodiment, processor 902 includes cache memory 904. In at least one embodiment, processor 902 may have a single internal cache or multiple levels of internal cache. In at least one embodiment, cache memory is shared among various components of processor 902. In at least one embodiment, processor 902 also uses an external cache (e.g., a Level-3 (L3) cache or Last Level Cache (LLC)) (not shown), which may be shared among processor cores 907 using known cache coherency techniques. In at least one embodiment, register file 906 is additionally included in processor 902 which may include different types of registers for storing different types of data (e.g., integer registers, floating point registers, status registers, and an instruction pointer register). In at least one embodiment, register file 906 may include general-purpose registers or other registers.

In at least one embodiment, one or more processor(s) 902 are coupled with one or more interface bus(es) 910 to transmit communication signals such as address, data, or control signals between processor 902 and other components in system 900. In at least one embodiment, interface bus 910, in one embodiment, may be a processor bus, such as a version of a Direct Media Interface (DMI) bus. In at least one embodiment, interface 910 is not limited to a DMI bus, and may include one or more Peripheral Component Interconnect buses (e.g., PCI, PCI Express), memory busses, or other types of interface busses. In at least one embodiment processor(s) 902 include an integrated memory controller 916 and a platform controller hub 930. In at least one embodiment, memory controller 916 facilitates communication between a memory device and other components of system 900, while platform controller hub (PCH) 930 provides connections to I/O devices via a local I/O bus.

In at least one embodiment, memory device 920 may be a dynamic random access memory (DRAM) device, a static random access memory (SRAM) device, flash memory device, phase-change memory device, or some other memory device having suitable performance to serve as process memory. In at least one embodiment memory device 920 may operate as system memory for system 900, to store data 922 and instructions 921 for use when one or more processors 902 executes an application or process. In at least one embodiment, memory controller 916 also couples with an optional external graphics processor 912, which may communicate with one or more graphics processors 908 in processors 902 to perform graphics and media operations. In at least one embodiment, a display device 911 may connect to processor(s) 902. In at least one embodiment display device 911 may include one or more of an internal display device, as in a mobile electronic device or a laptop device or an external display device attached via a display interface (e.g., DisplayPort, etc.). In at least one embodiment, display device 911 may include a head mounted display (HMD) such as a stereoscopic display device for use in virtual reality (VR) applications or augmented reality (AR) applications.

In at least one embodiment, platform controller hub 930 enables peripherals to connect to memory device 920 and processor 902 via a high-speed I/O bus. In at least one embodiment, I/O peripherals include, but are not limited to, an audio controller 946, a network controller 934, a firmware interface 928, a wireless transceiver 926, touch sensors 925, a data storage device 924 (e.g., hard disk drive, flash memory, etc.). In at least one embodiment, data storage device 924 may connect via a storage interface (e.g., SATA) or via a peripheral bus, such as a Peripheral Component Interconnect bus (e.g., PCI, PCI Express). In at least one embodiment, touch sensors 925 may include touch screen sensors, pressure sensors, or fingerprint sensors. In at least one embodiment, wireless transceiver 926 may be a Wi-Fi transceiver, a Bluetooth transceiver, or a mobile network transceiver such as a 3G, 4G, or Long Term Evolution (LTE) transceiver. In at least one embodiment, firmware interface 928 enables communication with system firmware, and may be, for example, a unified extensible firmware interface (UEFI). In at least one embodiment, network controller 934 may enable a network connection to a wired network. In at least one embodiment, a high-performance network controller (not shown) couples with interface bus 910. In at least one embodiment, audio controller 946 is a multi-channel high definition audio controller. In at least one embodiment, system 900 includes an optional legacy I/O controller 940 for coupling legacy (e.g., Personal System 2 (PS/2)) devices to system. In at least one embodiment, platform controller hub 930 may also connect to one or more Universal Serial Bus (USB) controllers 942 connect input devices, such as keyboard and mouse 943 combinations, a camera 944, or other USB input devices.

In at least one embodiment, an instance of memory controller 916 and platform controller hub 930 may be integrated into a discreet external graphics processor, such as external graphics processor 912. In at least one embodiment, platform controller hub 930 and/or memory controller 916 may be external to one or more processor(s) 902. For example, in at least one embodiment, system 900 may include an external memory controller 916 and platform controller hub 930, which may be configured as a memory controller hub and peripheral controller hub within a system chipset that is in communication with processor(s) 902.

Inference and/or training logic 515 are used to perform inferencing and/or training operations associated with one or more embodiments. Details regarding inference and/or training logic 515 are provided below in conjunction with FIGS. 5A and/or 5B. In at least one embodiment portions or all of inference and/or training logic 515 may be incorporated into graphics processor 900. For example, in at least one embodiment, training and/or inferencing techniques described herein may use one or more of ALUs embodied in a graphics processor. Moreover, in at least one embodiment, inferencing and/or training operations described herein may be done using logic other than logic illustrated in FIGS. 5A or 5B. In at least one embodiment, weight parameters may be stored in on-chip or off-chip memory and/or registers (shown or not shown) that configure ALUs of a graphics processor to perform one or more machine learning algorithms, neural network architectures, use cases, or training techniques described herein.

Such components may be used to generate synthetic data imitating failure cases in a network training process, which may help to improve performance of the network while limiting the amount of synthetic data to avoid overfitting.

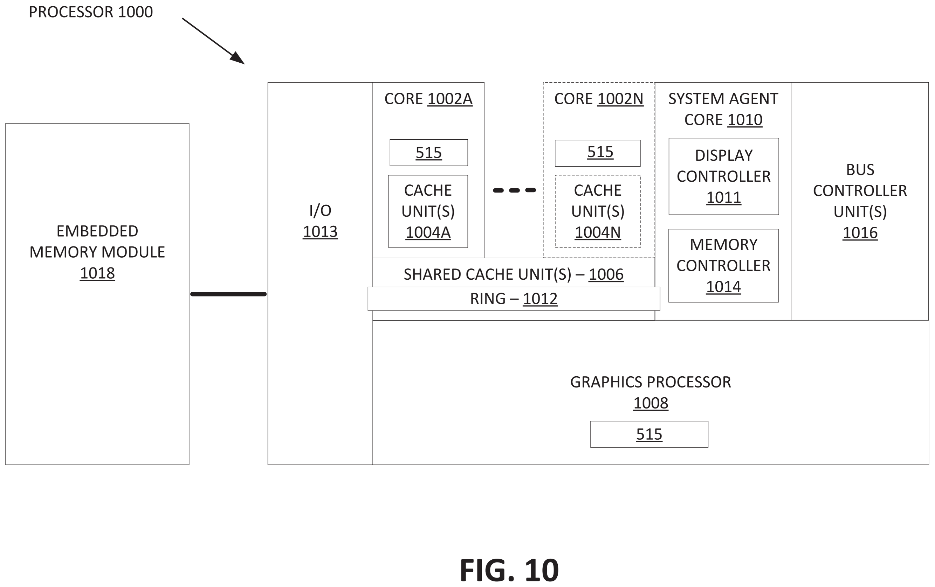

**FIG. 10** is a block diagram of a processor 1000 having one or more processor cores 1002A-1002N, an integrated memory controller 1014, and an integrated graphics processor 1008, according to at least one embodiment. For example, processor 1000 may be included in, or otherwise accessed by, server device 160, data store 150, and/or computing device 102 of FIG. 1, in embodiments. In at least one embodiment, processor 1000 may include additional cores up to and including additional core 1002N represented by dashed lined boxes. In at least one embodiment, each of processor cores 1002A-1002N includes one or more internal cache units 1004A-1004N. In at least one embodiment, each processor core also has access to one or more shared cached units 1006.

In at least one embodiment, internal cache units 1004A-1004N and shared cache units 1006 represent a cache memory hierarchy within processor 1000. In at least one embodiment, cache memory units 1004A-1004N may include at least one level of instruction and data cache within each processor core and one or more levels of shared mid-level cache, such as a Level 2 (L2), Level 3 (L3), Level 4 (L4), or other levels of cache, where a highest level of cache before external memory is classified as an LLC. In at least one embodiment, cache coherency logic maintains coherency between various cache units 1006 and 1004A-1004N.

In at least one embodiment, processor 1000 may also include a set of one or more bus controller units 1016 and a system agent core 1010. In at least one embodiment, one or more bus controller units 1016 manage a set of peripheral buses, such as one or more PCI or PCI express busses. In at least one embodiment, system agent core 1010 provides management functionality for various processor components. In at least one embodiment, system agent core 1010 includes one or more integrated memory controllers 1014 to manage access to various external memory devices (not shown).

In at least one embodiment, one or more of processor cores 1002A-1002N include support for simultaneous multi-threading. In at least one embodiment, system agent core 1010 includes components for coordinating and operating cores 1002A-1002N during multi-threaded processing. In at least one embodiment, system agent core 1010 may additionally include a power control unit (PCU), which includes logic and components to regulate one or more power states of processor cores 1002A-1002N and graphics processor 1008.

In at least one embodiment, processor 1000 additionally includes graphics processor 1008 to execute graphics processing operations. In at least one embodiment, graphics processor 1008 couples with shared cache units 1006, and system agent core 1010, including one or more integrated memory controllers 1014. In at least one embodiment, system agent core 1010 also includes a display controller 1011 to drive graphics processor output to one or more coupled displays. In at least one embodiment, display controller 1011 may also be a separate module coupled with graphics processor 1008 via at least one interconnect, or may be integrated within graphics processor 1008.

In at least one embodiment, a ring based interconnect unit 1012 is used to couple internal components of processor 1000. In at least one embodiment, an alternative interconnect unit may be used, such as a point-to-point interconnect, a switched interconnect, or other techniques. In at least one embodiment, graphics processor 1008 couples with ring interconnect 1012 via an I/O link 1013.

In at least one embodiment, I/O link 1013 represents at least one of multiple varieties of I/O interconnects, including an on package I/O interconnect which facilitates communication between various processor components and a high-performance embedded memory module 1018, such as an eDRAM module. In at least one embodiment, each of processor cores 1002A-1002N and graphics processor 1008 use embedded memory modules 1018 as a shared Last Level Cache.

In at least one embodiment, processor cores 1002A-1002N are homogenous cores executing a common instruction set architecture. In at least one embodiment, processor cores 1002A-1002N are heterogeneous in terms of instruction set architecture (ISA), where one or more of processor cores 1002A-1002N execute a common instruction set, while one or more other cores of processor cores 1002A-1002N executes a subset of a common instruction set or a different instruction set. In at least one embodiment, processor cores 1002A-1002N are heterogeneous in terms of microarchitecture, where one or more cores having a relatively higher power consumption couple with one or more power cores having a lower power consumption. In at least one embodiment, processor 1000 may be implemented on one or more chips or as an SoC integrated circuit.

Inference and/or training logic 515 are used to perform inferencing and/or training operations associated with one or more embodiments. Details regarding inference and/or training logic 515 are provided below in conjunction with FIGs. 5A and/or 5B. In at least one embodiment portions or all of inference and/or training logic 515 may be incorporated into processor 1000. For example, in at least one embodiment, training and/or inferencing techniques described herein may use one or more of ALUs embodied in graphics processor 1008, graphics core(s) 1002A-1002N, or other components in FIG. 10. Moreover, in at least one embodiment, inferencing and/or training operations described herein may be done using logic other than logic illustrated in FIGS. 5A or 5B. In at least one embodiment, weight parameters may be stored in on-chip or off-chip memory and/or registers (shown or not shown) that configure ALUs of graphics processor 1000 to perform one or more machine learning algorithms, neural network architectures, use cases, or training techniques described herein.

Such components may be used to generate synthetic data imitating failure cases in a network training process, which may help to improve performance of the network while limiting the amount of synthetic data to avoid overfitting.

### VIRTUALIZED COMPUTING PLATFORM

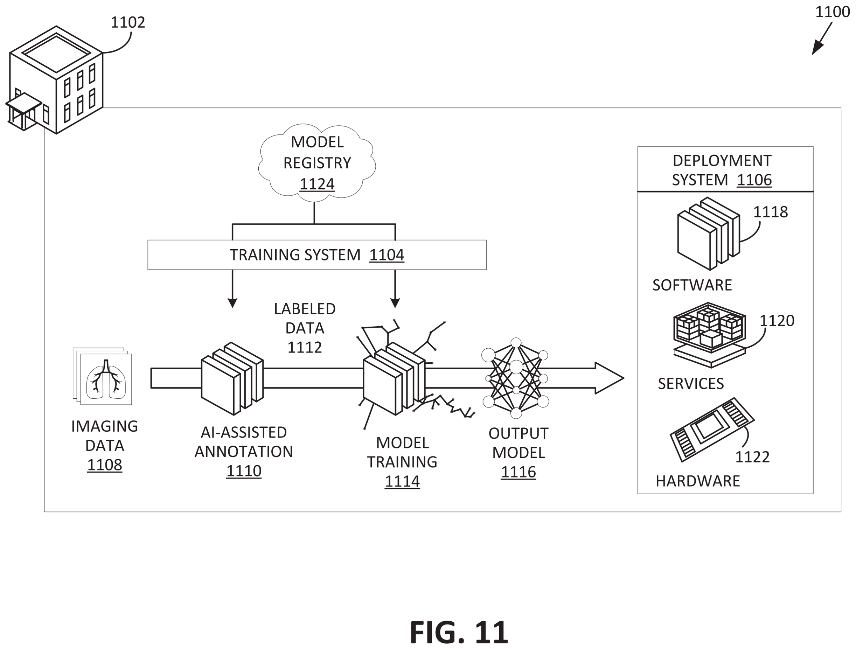

**FIG. 11** is an example data flow diagram for a process 1100 of generating and deploying an image processing and inferencing pipeline, in accordance with at least one embodiment, such as with regards to the generation of animation data as described herein. In at least one embodiment, process 1100 may be deployed for use with imaging devices, processing devices, and/or other device types at one or more facilities 1102. Process 1100 may be executed within a training system 1104 and/or a deployment system 1106. In at least one embodiment, training system 1104 may be used to perform training, deployment, and implementation of machine learning models (e.g., neural networks, object detection algorithms, computer vision algorithms, etc.) for use in deployment system 1106. In at least one embodiment, deployment system 1106 may be configured to offload processing and compute resources among a distributed computing environment to reduce infrastructure requirements at facility 1102. In at least one embodiment, one or more applications in a pipeline may use or call upon services (e.g., inference, visualization, compute, AI, etc.) of deployment system 1106 during execution of applications.

In at least one embodiment, some of applications used in advanced processing and inferencing pipelines may use machine learning models or other AI to perform one or more processing steps. In at least one embodiment, machine learning models may be trained at facility 1102 using data 1108 (such as imaging data) generated at facility 1102 (and stored on one or more picture archiving and communication system (PACS) servers at facility 1102), may be trained using imaging or sequencing data 1108 from another facility(ies), or a combination thereof. In at least one embodiment, training system 1104 may be used to provide applications, services, and/or other resources for generating working, deployable machine learning models for deployment system 1106.

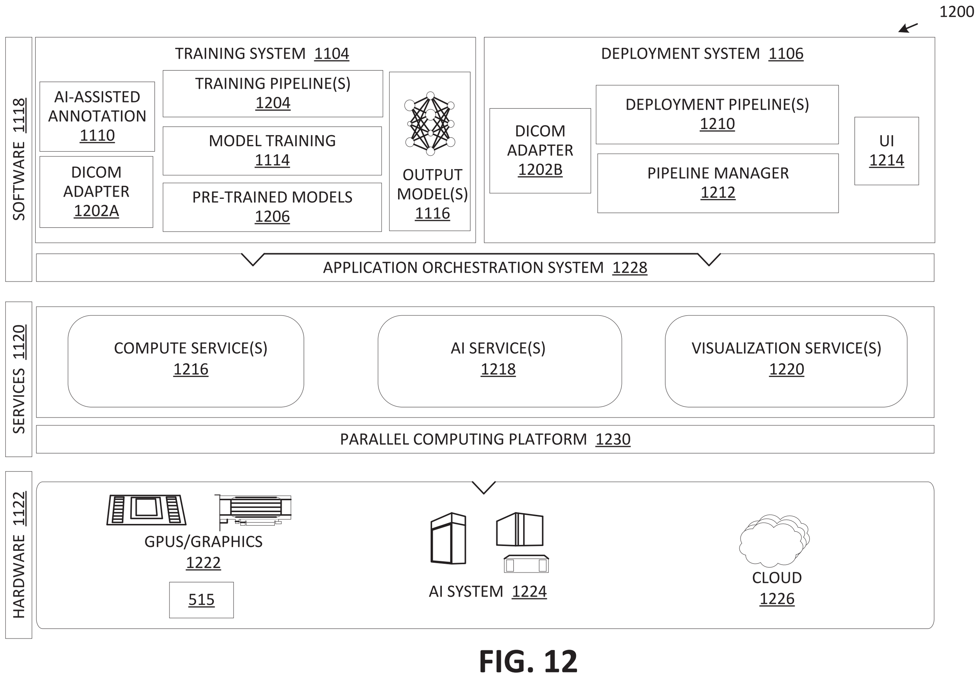

In at least one embodiment, model registry 1124 may be backed by object storage that may support versioning and object metadata. In at least one embodiment, object storage may be accessible through, for example, a cloud storage (e.g., cloud 1226 of FIG. 12) compatible application programming interface (API) from within a cloud platform. In at least one embodiment, machine learning models within model registry 1124 may uploaded, listed, modified, or deleted by developers or partners of a system interacting with an API. In at least one embodiment, an API may provide access to methods that allow users with appropriate credentials to associate models with applications, such that models may be executed as part of execution of containerized instantiations of applications.

In at least one embodiment, training pipeline 1204 (FIG. 12) may include a scenario where facility 1102 is training their own machine learning model, or has an existing machine learning model that needs to be optimized or updated. In at least one embodiment, imaging data 1108 generated by imaging device(s), sequencing devices, and/or other device types may be received. In at least one embodiment, once imaging data 1108 is received, AI-assisted annotation 1110 may be used to aid in generating annotations corresponding to imaging data 1108 to be used as ground truth data for a machine learning model. In at least one embodiment, AI-assisted annotation 1110 may include one or more machine learning models (e.g., convolutional neural networks (CNNs)) that may be trained to generate annotations corresponding to certain types of imaging data 1108 (e.g., from certain devices). In at least one embodiment, AI-assisted annotations 1110 may then be used directly, or may be adjusted or fine-tuned using an annotation tool to generate ground truth data. In at least one embodiment, AI-assisted annotations 1110, labeled clinic data 1112, or a combination thereof may be used as ground truth data for training a machine learning model. In at least one embodiment, a trained machine learning model may be referred to as output model 1116, and may be used by deployment system 1106, as described herein.

In at least one embodiment, training pipeline 1204 (FIG. 12) may include a scenario where facility 1102 needs a machine learning model for use in performing one or more processing tasks for one or more applications in deployment system 1106, but facility 1102 may not currently have such a machine learning model (or may not have a model that is optimized, efficient, or effective for such purposes). In at least one embodiment, an existing machine learning model may be selected from a model registry 1124. In at least one embodiment, model registry 1124 may include machine learning models trained to perform a variety of different inference tasks on imaging data. In at least one embodiment, machine learning models in model registry 1124 may have been trained on imaging data from different facilities than facility 1102 (e.g., facilities remotely located). In at least one embodiment, machine learning models may have been trained on imaging data from one location, two locations, or any number of locations. In at least one embodiment, when being trained on imaging data from a specific location, training may take place at that location, or at least in a manner that protects confidentiality of imaging data or restricts imaging data from being transferred off-premises. In at least one embodiment, once a model is trained - or partially trained - at one location, a machine learning model may be added to model registry 1124. In at least one embodiment, a machine learning model may then be retrained, or updated, at any number of other facilities, and a retrained or updated model may be made available in model registry 1124. In at least one embodiment, a machine learning model may then be selected from model registry 1124 - and referred to as output model 1116 - and may be used in deployment system 1106 to perform one or more processing tasks for one or more applications of a deployment system.

In at least one embodiment, training pipeline 1204 (FIG. 12), a scenario may include facility 1102 requiring a machine learning model for use in performing one or more processing tasks for one or more applications in deployment system 1106, but facility 1102 may not currently have such a machine learning model (or may not have a model that is optimized, efficient, or effective for such purposes). In at least one embodiment, a machine learning model selected from model registry 1124 may not be fine-tuned or optimized for imaging data 1108 generated at facility 1102 because of differences in populations, robustness of training data used to train a machine learning model, diversity in anomalies of training data, and/or other issues with training data. In at least one embodiment, AI-assisted annotation 1110 may be used to aid in generating annotations corresponding to imaging data 1108 to be used as ground truth data for retraining or updating a machine learning model. In at least one embodiment, labeled data 1112 may be used as ground truth data for training a machine learning model. In at least one embodiment, retraining or updating a machine learning model may be referred to as model training 1114. In at least one embodiment, model training 1114 - e.g., AI-assisted annotations 1110, labeled clinic data 1112, or a combination thereof - may be used as ground truth data for retraining or updating a machine learning model. In at least one embodiment, a trained machine learning model may be referred to as output model 1116, and may be used by deployment system 1106, as described herein.

In at least one embodiment, deployment system 1106 may include software 1118, services 1120, hardware 1122, and/or other components, features, and functionality. In at least one embodiment, deployment system 1106 may include a software "stack," such that software 1118 may be built on top of services 1120 and may use services 1120 to perform some or all of processing tasks, and services 1120 and software 1118 may be built on top of hardware 1122 and use hardware 1122 to execute processing, storage, and/or other compute tasks of deployment system 1106. In at least one embodiment, software 1118 may include any number of different containers, where each container may execute an instantiation of an application. In at least one embodiment, each application may perform one or more processing tasks in an advanced processing and inferencing pipeline (e.g., inferencing, object detection, feature detection, segmentation, image enhancement, calibration, etc.). In at least one embodiment, an advanced processing and inferencing pipeline may be defined based on selections of different containers that are desired or required for processing imaging data 1108, in addition to containers that receive and configure imaging data for use by each container and/or for use by facility 1102 after processing through a pipeline (e.g., to convert outputs back to a usable data type). In at least one embodiment, a combination of containers within software 1118 (e.g., that make up a pipeline) may be referred to as a virtual instrument (as described in more detail herein), and a virtual instrument may leverage services 1120 and hardware 1122 to execute some or all processing tasks of applications instantiated in containers.

In at least one embodiment, a data processing pipeline may receive input data (e.g., imaging data 1108) in a specific format in response to an inference request (e.g., a request from a user of deployment system 1106). In at least one embodiment, input data may be representative of one or more images, video, and/or other data representations generated by one or more imaging devices. In at least one embodiment, data may undergo pre-processing as part of data processing pipeline to prepare data for processing by one or more applications. In at least one embodiment, post-processing may be performed on an output of one or more inferencing tasks or other processing tasks of a pipeline to prepare an output data for a next application and/or to prepare output data for transmission and/or use by a user (e.g., as a response to an inference request). In at least one embodiment, inferencing tasks may be performed by one or more machine learning models, such as trained or deployed neural networks, which may include output models 1116 of training system 1104.

In at least one embodiment, tasks of data processing pipeline may be encapsulated in a container(s) that each represents a discrete, fully functional instantiation of an application and virtualized computing environment that is able to reference machine learning models. In at least one embodiment, containers or applications may be published into a private (e.g., limited access) area of a container registry (described in more detail herein), and trained or deployed models may be stored in model registry 1124 and associated with one or more applications. In at least one embodiment, images of applications (e.g., container images) may be available in a container registry, and once selected by a user from a container registry for deployment in a pipeline, an image may be used to generate a container for an instantiation of an application for use by a user's system.

In at least one embodiment, developers (e.g., software developers, clinicians, doctors, etc.) may develop, publish, and store applications (e.g., as containers) for performing image processing and/or inferencing on supplied data. In at least one embodiment, development, publishing, and/or storing may be performed using a software development kit (SDK) associated with a system (e.g., to ensure that an application and/or container developed is compliant with or compatible with a system). In at least one embodiment, an application that is developed may be tested locally (e.g., at a first facility, on data from a first facility) with an SDK which may support at least some of services 1120 as a system (e.g., system 1200 of FIG. 12). In at least one embodiment, because DICOM objects may contain anywhere from one to hundreds of images or other data types, and due to a variation in data, a developer may be responsible for managing (e.g., setting constructs for, building pre-processing into an application, etc.) extraction and preparation of incoming data. In at least one embodiment, once validated by system 1200 (e.g., for accuracy), an application may be available in a container registry for selection and/or implementation by a user to perform one or more processing tasks with respect to data at a facility (e.g., a second facility) of a user.

In at least one embodiment, developers may then share applications or containers through a network for access and use by users of a system (e.g., system 1200 of FIG. 12). In at least one embodiment, completed and validated applications or containers may be stored in a container registry and associated machine learning models may be stored in model registry 1124. In at least one embodiment, a requesting entity - who provides an inference or image processing request - may browse a container registry and/or model registry 1124 for an application, container, dataset, machine learning model, etc., select a desired combination of elements for inclusion in data processing pipeline, and submit an imaging processing request. In at least one embodiment, a request may include input data (and associated patient data, in some examples) that is necessary to perform a request, and/or may include a selection of application(s) and/or machine learning models to be executed in processing a request. In at least one embodiment, a request may then be passed to one or more components of deployment system 1106 (e.g., a cloud) to perform processing of data processing pipeline. In at least one embodiment, processing by deployment system 1106 may include referencing selected elements (e.g., applications, containers, models, etc.) from a container registry and/or model registry 1124. In at least one embodiment, once results are generated by a pipeline, results may be returned to a user for reference (e.g., for viewing in a viewing application suite executing on a local, on-premises workstation or terminal).

In at least one embodiment, to aid in processing or execution of applications or containers in pipelines, services 1120 may be leveraged. In at least one embodiment, services 1120 may include compute services, artificial intelligence (AI) services, visualization services, and/or other service types. In at least one embodiment, services 1120 may provide functionality that is common to one or more applications in software 1118, so functionality may be abstracted to a service that may be called upon or leveraged by applications. In at least one embodiment, functionality provided by services 1120 may run dynamically and more efficiently, while also scaling well by allowing applications to process data in parallel (e.g., using a parallel computing platform 1230 (FIG. 12)). In at least one embodiment, rather than each application that shares a same functionality offered by a service 1120 being required to have a respective instance of service 1120, service 1120 may be shared between and among various applications. In at least one embodiment, services may include an inference server or engine that may be used for executing detection or segmentation tasks, as non-limiting examples. In at least one embodiment, a model training service may be included that may provide machine learning model training and/or retraining capabilities. In at least one embodiment, a data augmentation service may further be included that may provide GPU accelerated data (e.g., DICOM, RIS, CIS, REST compliant, RPC, raw, etc.) extraction, resizing, scaling, and/or other augmentation. In at least one embodiment, a visualization service may be used that may add image rendering effects - such as ray-tracing, rasterization, denoising, sharpening, etc. - to add realism to two-dimensional (2D) and/or three-dimensional (3D) models. In at least one embodiment, virtual instrument services may be included that provide for beam-forming, segmentation, inferencing, imaging, and/or support for other applications within pipelines of virtual instruments.

In at least one embodiment, where a service 1120 includes an AI service (e.g., an inference service), one or more machine learning models may be executed by calling upon (e.g., as an API call) an inference service (e.g., an inference server) to execute machine learning model(s), or processing thereof, as part of application execution. In at least one embodiment, where another application includes one or more machine learning models for segmentation tasks, an application may call upon an inference service to execute machine learning models for performing one or more of processing operations associated with segmentation tasks. In at least one embodiment, software 1118 implementing advanced processing and inferencing pipeline that includes segmentation application and anomaly detection application may be streamlined because each application may call upon a same inference service to perform one or more inferencing tasks.

In at least one embodiment, hardware 1122 may include GPUs, CPUs, DPUs, graphics cards, an AI/deep learning system (e.g., an AI supercomputer, such as NVIDIA's DGX), a cloud platform, or a combination thereof. In at least one embodiment, different types of hardware 1122 may be used to provide efficient, purpose-built support for software 1118 and services 1120 in deployment system 1106. In at least one embodiment, use of GPU processing may be implemented for processing locally (e.g., at facility 1102), within an AI/deep learning system, in a cloud system, and/or in other processing components of deployment system 1106 to improve efficiency, accuracy, and efficacy of image processing and generation. In at least one embodiment, software 1118 and/or services 1120 may be optimized for GPU processing with respect to deep learning, machine learning, and/or high-performance computing, as non-limiting examples. In at least one embodiment, at least some of computing environment of deployment system 1106 and/or training system 1104 may be executed in a datacenter one or more supercomputers or high performance computing systems, with GPU optimized software (e.g., hardware and software combination of NVIDIA's DGX System). In at least one embodiment, hardware 1122 may include any number of GPUs that may be called upon to perform processing of data in parallel, as described herein. In at least one embodiment, cloud platform may further include GPU processing for GPU-optimized execution of deep learning tasks, machine learning tasks, or other computing tasks. In at least one embodiment, cloud platform may further include DPU processing to transmit data received over a network and/or through a network controller or other network interface directly to (e.g., a memory of) one or more GPU(s). In at least one embodiment, cloud platform (e.g., NVIDIA's NGC) may be executed using an AI/deep learning supercomputer(s) and/or GPU-optimized software (e.g., as provided on NVIDIA's DGX Systems) as a hardware abstraction and scaling platform. In at least one embodiment, cloud platform may integrate an application container clustering system or orchestration system (e.g., KUBERNETES) on multiple GPUs to enable seamless scaling and load balancing.

**FIG. 12** is a system diagram for an example system 1200 for generating and deploying an imaging deployment pipeline, in accordance with at least one embodiment, such as with regards to the generation of animation data as described herein. In at least one embodiment, system 1200 may be used to implement process 1100 of FIG. 11 and/or other processes including advanced processing and inferencing pipelines. In at least one embodiment, system 1200 may include training system 1104 and deployment system 1106. In at least one embodiment, training system 1104 and deployment system 1106 may be implemented using software 1118, services 1120, and/or hardware 1122, as described herein.

In at least one embodiment, system 1200 (e.g., training system 1104 and/or deployment system 1106) may implemented in a cloud computing environment (e.g., using cloud 1226). In at least one embodiment, system 1200 may be implemented locally with respect to a healthcare services facility, or as a combination of both cloud and local computing resources. In at least one embodiment, access to APIs in cloud 1226 may be restricted to authorized users through enacted security measures or protocols. In at least one embodiment, a security protocol may include web tokens that may be signed by an authentication (e.g., AuthN, AuthZ, Gluecon, etc.) service and may carry appropriate authorization. In at least one embodiment, APIs of virtual instruments (described herein), or other instantiations of system 1200, may be restricted to a set of public IPs that have been vetted or authorized for interaction.

In at least one embodiment, various components of system 1200 may communicate between and among one another using any of a variety of different network types, including but not limited to local area networks (LANs) and/or wide area networks (WANs) via wired and/or wireless communication protocols. In at least one embodiment, communication between facilities and components of system 1200 (e.g., for transmitting inference requests, for receiving results of inference requests, etc.) may be communicated over data bus(ses), wireless data protocols (Wi-Fi), wired data protocols (e.g., Ethernet), etc.

In at least one embodiment, training system 1104 may execute training pipelines 1204, similar to those described herein with respect to FIG. 11. In at least one embodiment, where one or more machine learning models are to be used in deployment pipelines 1210 by deployment system 1106, training pipelines 1204 may be used to train or retrain one or more (e.g., pre-trained) models, and/or implement one or more of pre-trained models 1206 (e.g., without a need for retraining or updating). In at least one embodiment, as a result of training pipelines 1204, output model(s) 1116 may be generated. In at least one embodiment, training pipelines 1204 may include any number of processing steps, such as but not limited to imaging data (or other input data) conversion or adaption In at least one embodiment, for different machine learning models used by deployment system 1106, different training pipelines 1204 may be used. In at least one embodiment, training pipeline 1204 similar to a first example described with respect to FIG. 11 may be used for a first machine learning model, training pipeline 1204 similar to a second example described with respect to **FIG. 11** may be used for a second machine learning model, and training pipeline 1204 similar to a third example described with respect to **FIG. 11** may be used for a third machine learning model. In at least one embodiment, any combination of tasks within training system 1104 may be used depending on what is required for each respective machine learning model. In at least one embodiment, one or more of machine learning models may already be trained and ready for deployment so machine learning models may not undergo any processing by training system 1104, and may be implemented by deployment system 1106.

In at least one embodiment, output model(s) 1116 and/or pre-trained model(s) 1206 may include any types of machine learning models depending on implementation or embodiment. In at least one embodiment, and without limitation, machine learning models used by system 1200 may include machine learning model(s) using linear regression, logistic regression, decision trees, support vector machines (SVM), Naïve Bayes, k-nearest neighbor (Knn), K means clustering, random forest, dimensionality reduction algorithms, gradient boosting algorithms, neural networks (e.g., auto-encoders, convolutional, recurrent, perceptrons, Long/Short Term Memory (LSTM), Hopfield, Boltzmann, deep belief, deconvolutional, generative adversarial, liquid state machine, etc.), and/or other types of machine learning models.

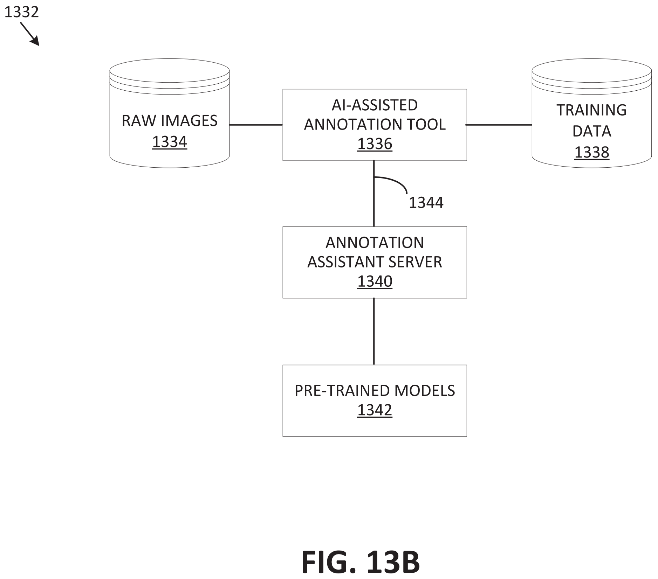

In at least one embodiment, training pipelines 1204 may include AI-assisted annotation, as described in more detail herein with respect to at least **FIG. 13B****.** In at least one embodiment, labeled data 1112 (e.g., traditional annotation) may be generated by any number of techniques. In at least one embodiment, labels or other annotations may be generated within a drawing program (e.g., an annotation program), a computer aided design (CAD) program, a labeling program, another type of program suitable for generating annotations or labels for ground truth, and/or may be hand drawn, in some examples. In at least one embodiment, ground truth data may be synthetically produced (e.g., generated from computer models or renderings), real produced (e.g., designed and produced from real-world data), machine-automated (e.g., using feature analysis and learning to extract features from data and then generate labels), human annotated (e.g., labeler, or annotation expert, defines location of labels), and/or a combination thereof. In at least one embodiment, for each instance of imaging data 1108 (or other data type used by machine learning models), there may be corresponding ground truth data generated by training system 1104. In at least one embodiment, AI-assisted annotation may be performed as part of deployment pipelines 1210; either in addition to, or in lieu of AI-assisted annotation included in training pipelines 1204. In at least one embodiment, system 1200 may include a multi-layer platform that may include a software layer (e.g., software 1118) of diagnostic applications (or other application types) that may perform one or more medical imaging and diagnostic functions. In at least one embodiment, system 1200 may be communicatively coupled to (e.g., via encrypted links) PACS server networks of one or more facilities. In at least one embodiment, system 1200 may be configured to access and referenced data from PACS servers to perform operations, such as training machine learning models, deploying machine learning models, image processing, inferencing, and/or other operations.

In at least one embodiment, a software layer may be implemented as a secure, encrypted, and/or authenticated API through which applications or containers may be invoked (e.g., called) from an external environment(s) (e.g., facility 1102). In at least one embodiment, applications may then call or execute one or more services 1120 for performing compute, AI, or visualization tasks associated with respective applications, and software 1118 and/or services 1120 may leverage hardware 1122 to perform processing tasks in an effective and efficient manner.

In at least one embodiment, deployment system 1106 may execute deployment pipelines 1210. In at least one embodiment, deployment pipelines 1210 may include any number of applications that may be sequentially, non-sequentially, or otherwise applied to imaging data (and/or other data types) generated by imaging devices, sequencing devices, genomics devices, etc. - including AI-assisted annotation, as described above. In at least one embodiment, as described herein, a deployment pipeline 1210 for an individual device may be referred to as a virtual instrument for a device (e.g., a virtual ultrasound instrument, a virtual CT scan instrument, a virtual sequencing instrument, etc.). In at least one embodiment, for a single device, there may be more than one deployment pipeline 1210 depending on information desired from data generated by a device. In at least one embodiment, where detections of anomalies are desired from an MRI machine, there may be a first deployment pipeline 1210, and where image enhancement is desired from output of an MRI machine, there may be a second deployment pipeline 1210.

In at least one embodiment, an image generation application may include a processing task that includes use of a machine learning model. In at least one embodiment, a user may desire to use their own machine learning model, or to select a machine learning model from model registry 1124. In at least one embodiment, a user may implement their own machine learning model or select a machine learning model for inclusion in an application for performing a processing task. In at least one embodiment, applications may be selectable and customizable, and by defining constructs of applications, deployment, and implementation of applications for a particular user are presented as a more seamless user experience. In at least one embodiment, by leveraging other features of system 1200 - such as services 1120 and hardware 1122 -deployment pipelines 1210 may be even more user friendly, provide for easier integration, and produce more accurate, efficient, and timely results.

In at least one embodiment, deployment system 1106 may include a user interface 1214 (e.g., a graphical user interface, a web interface, etc.) that may be used to select applications for inclusion in deployment pipeline(s) 1210, arrange applications, modify, or change applications or parameters or constructs thereof, use and interact with deployment pipeline(s) 1210 during set-up and/or deployment, and/or to otherwise interact with deployment system 1106. In at least one embodiment, although not illustrated with respect to training system 1104, user interface 1214 (or a different user interface) may be used for selecting models for use in deployment system 1106, for selecting models for training, or retraining, in training system 1104, and/or for otherwise interacting with training system 1104.

In at least one embodiment, pipeline manager 1212 may be used, in addition to an application orchestration system 1228, to manage interaction between applications or containers of deployment pipeline(s) 1210 and services 1120 and/or hardware 1122. In at least one embodiment, pipeline manager 1212 may be configured to facilitate interactions from application to application, from application to service 1120, and/or from application or service to hardware 1122. In at least one embodiment, although illustrated as included in software 1118, this is not intended to be limiting, and in some examples (e.g., as illustrated in FIG. 10) pipeline manager 1212 may be included in services 1120. In at least one embodiment, application orchestration system 1228 (e.g., Kubernetes, DOCKER, etc.) may include a container orchestration system that may group applications into containers as logical units for coordination, management, scaling, and deployment. In at least one embodiment, by associating applications from deployment pipeline(s) 1210 (e.g., a reconstruction application, a segmentation application, etc.) with individual containers, each application may execute in a self-contained environment (e.g., at a kernel level) to increase speed and efficiency.

In at least one embodiment, each application and/or container (or image thereof) may be individually developed, modified, and deployed (e.g., a first user or developer may develop, modify, and deploy a first application and a second user or developer may develop, modify, and deploy a second application separate from a first user or developer), which may allow for focus on, and attention to, a task of a single application and/or container(s) without being hindered by tasks of another application(s) or container(s). In at least one embodiment, communication, and cooperation between different containers or applications may be aided by pipeline manager 1212 and application orchestration system 1228. In at least one embodiment, so long as an expected input and/or output of each container or application is known by a system (e.g., based on constructs of applications or containers), application orchestration system 1228 and/or pipeline manager 1212 may facilitate communication among and between, and sharing of resources among and between, each of applications or containers. In at least one embodiment, because one or more of applications or containers in deployment pipeline(s) 1210 may share same services and resources, application orchestration system 1228 may orchestrate, load balance, and determine sharing of services or resources between and among various applications or containers. In at least one embodiment, a scheduler may be used to track resource requirements of applications or containers, current usage or planned usage of these resources, and resource availability. In at least one embodiment, a scheduler may thus allocate resources to different applications and distribute resources between and among applications in view of requirements and availability of a system. In some examples, a scheduler (and/or other component of application orchestration system 1228) may determine resource availability and distribution based on constraints imposed on a system (e.g., user constraints), such as quality of service (QoS), urgency of need for data outputs (e.g., to determine whether to execute real-time processing or delayed processing), etc.

In at least one embodiment, services 1120 leveraged by and shared by applications or containers in deployment system 1106 may include compute services 1216, AI services 1218, visualization services 1220, and/or other service types. In at least one embodiment, applications may call (e.g., execute) one or more of services 1120 to perform processing operations for an application. In at least one embodiment, compute services 1216 may be leveraged by applications to perform super-computing or other high-performance computing (HPC) tasks. In at least one embodiment, compute service(s) 1216 may be leveraged to perform parallel processing (e.g., using a parallel computing platform 1230) for processing data through one or more of applications and/or one or more tasks of a single application, substantially simultaneously. In at least one embodiment, parallel computing platform 1230 (e.g., NVIDIA's CUDA) may enable general purpose computing on GPUs (GPGPU) (e.g., GPUs 1222). In at least one embodiment, a software layer of parallel computing platform 1230 may provide access to virtual instruction sets and parallel computational elements of GPUs, for execution of compute kernels. In at least one embodiment, parallel computing platform 1230 may include memory and, in some embodiments, a memory may be shared between and among multiple containers, and/or between and among different processing tasks within a single container. In at least one embodiment, inter-process communication (IPC) calls may be generated for multiple containers and/or for multiple processes within a container to use same data from a shared segment of memory of parallel computing platform 1230 (e.g., where multiple different stages of an application or multiple applications are processing same information). In at least one embodiment, rather than making a copy of data and moving data to different locations in memory (e.g., a read/write operation), same data in same location of a memory may be used for any number of processing tasks (e.g., at a same time, at different times, etc.). In at least one embodiment, as data is used to generate new data as a result of processing, this information of a new location of data may be stored and shared between various applications. In at least one embodiment, location of data and a location of updated or modified data may be part of a definition of how a payload is understood within containers.

In at least one embodiment, AI services 1218 may be leveraged to perform inferencing services for executing machine learning model(s) associated with applications (e.g., tasked with performing one or more processing tasks of an application). In at least one embodiment, AI services 1218 may leverage AI system 1224 to execute machine learning model(s) (e.g., neural networks, such as CNNs) for segmentation, reconstruction, object detection, feature detection, classification, and/or other inferencing tasks. In at least one embodiment, applications of deployment pipeline(s) 1210 may use one or more of output models 1116 from training system 1104 and/or other models of applications to perform inference on imaging data. In at least one embodiment, two or more examples of inferencing using application orchestration system 1228 (e.g., a scheduler) may be available. In at least one embodiment, a first category may include a high priority/low latency path that may achieve higher service level agreements, such as for performing inference on urgent requests during an emergency, or for a radiologist during diagnosis. In at least one embodiment, a second category may include a standard priority path that may be used for requests that may be non-urgent or where analysis may be performed at a later time. In at least one embodiment, application orchestration system 1228 may distribute resources (e.g., services 1120 and/or hardware 1122) based on priority paths for different inferencing tasks of AI services 1218.

In at least one embodiment, shared storage may be mounted to AI services 1218 within system 1200. In at least one embodiment, shared storage may operate as a cache (or other storage device type) and may be used to process inference requests from applications. In at least one embodiment, when an inference request is submitted, a request may be received by a set of API instances of deployment system 1106, and one or more instances may be selected (e.g., for best fit, for load balancing, etc.) to process a request. In at least one embodiment, to process a request, a request may be entered into a database, a machine learning model may be located from model registry 1124 if not already in a cache, a validation step may ensure appropriate machine learning model is loaded into a cache (e.g., shared storage), and/or a copy of a model may be saved to a cache. In at least one embodiment, a scheduler (e.g., of pipeline manager 1212) may be used to launch an application that is referenced in a request if an application is not already running or if there are not enough instances of an application. In at least one embodiment, if an inference server is not already launched to execute a model, an inference server may be launched. Any number of inference servers may be launched per model. In at least one embodiment, in a pull model, in which inference servers are clustered, models may be cached whenever load balancing is advantageous. In at least one embodiment, inference servers may be statically loaded in corresponding, distributed servers.

In at least one embodiment, inferencing may be performed using an inference server that runs in a container. In at least one embodiment, an instance of an inference server may be associated with a model (and optionally a plurality of versions of a model). In at least one embodiment, if an instance of an inference server does not exist when a request to perform inference on a model is received, a new instance may be loaded. In at least one embodiment, when starting an inference server, a model may be passed to an inference server such that a same container may be used to serve different models so long as inference server is running as a different instance.

In at least one embodiment, during application execution, an inference request for a given application may be received, and a container (e.g., hosting an instance of an inference server) may be loaded (if not already), and a start procedure may be called. In at least one embodiment, pre-processing logic in a container may load, decode, and/or perform any additional pre-processing on incoming data (e.g., using a CPU(s) and/or GPU(s) and/or DPU(s)). In at least one embodiment, once data is prepared for inference, a container may perform inference as necessary on data. In at least one embodiment, this may include a single inference call on one image (e.g., a hand X-ray), or may require inference on hundreds of images (e.g., a chest CT). In at least one embodiment, an application may summarize results before completing, which may include, without limitation, a single confidence score, pixel level-segmentation, voxel-level segmentation, generating a visualization, or generating text to summarize findings. In at least one embodiment, different models or applications may be assigned different priorities. For example, some models may have a real-time (TAT < 1 min) priority while others may have lower priority (e.g., TAT < 11 min). In at least one embodiment, model execution times may be measured from requesting institution or entity and may include partner network traversal time, as well as execution on an inference service.

In at least one embodiment, transfer of requests between services 1120 and inference applications may be hidden behind a software development kit (SDK), and robust transport may be provided through a queue. In at least one embodiment, a request will be placed in a queue via an API for an individual application/tenant ID combination and an SDK will pull a request from a queue and give a request to an application. In at least one embodiment, a name of a queue may be provided in an environment from where an SDK will pick it up. In at least one embodiment, asynchronous communication through a queue may be useful as it may allow any instance of an application to pick up work as it becomes available. Results may be transferred back through a queue, to ensure no data is lost. In at least one embodiment, queues may also provide an ability to segment work, as highest priority work may go to a queue with most instances of an application connected to it, while lowest priority work may go to a queue with a single instance connected to it that processes tasks in an order received. In at least one embodiment, an application may run on a GPU-accelerated instance generated in cloud 1226, and an inference service may perform inferencing on a GPU.

In at least one embodiment, visualization services 1220 may be leveraged to generate visualizations for viewing outputs of applications and/or deployment pipeline(s) 1210. In at least one embodiment, GPUs 1222 may be leveraged by visualization services 1220 to generate visualizations. In at least one embodiment, rendering effects, such as ray-tracing, may be implemented by visualization services 1220 to generate higher quality visualizations. In at least one embodiment, visualizations may include, without limitation, 2D image renderings, 3D volume renderings, 3D volume reconstruction, 2D tomographic slices, virtual reality displays, augmented reality displays, etc. In at least one embodiment, virtualized environments may be used to generate a virtual interactive display or environment (e.g., a virtual environment) for interaction by users of a system (e.g., doctors, nurses, radiologists, etc.). In at least one embodiment, visualization services 1220 may include an internal visualizer, cinematics, and/or other rendering or image processing capabilities or functionality (e.g., ray tracing, rasterization, internal optics, etc.).

In at least one embodiment, hardware 1122 may include GPUs 1222, AI system 1224, cloud 1226, and/or any other hardware used for executing training system 1104 and/or deployment system 1106. In at least one embodiment, GPUs 1222 (e.g., NVIDIA's TESLA and/or QUADRO GPUs) may include any number of GPUs that may be used for executing processing tasks of compute services 1216, AI services 1218, visualization services 1220, other services, and/or any of features or functionality of software 1118. For example, with respect to AI services 1218, GPUs 1222 may be used to perform pre-processing on imaging data (or other data types used by machine learning models), post-processing on outputs of machine learning models, and/or to perform inferencing (e.g., to execute machine learning models). In at least one embodiment, cloud 1226, AI system 1224, and/or other components of system 1200 may use GPUs 1222. In at least one embodiment, cloud 1226 may include a GPU-optimized platform for deep learning tasks. In at least one embodiment, AI system 1224 may use GPUs, and cloud 1226 - or at least a portion tasked with deep learning or inferencing - may be executed using one or more AI systems 1224. As such, although hardware 1122 is illustrated as discrete components, this is not intended to be limiting, and any components of hardware 1122 may be combined with, or leveraged by, any other components of hardware 1122.

In at least one embodiment, AI system 1224 may include a purpose-built computing system (e.g., a super-computer or an HPC) configured for inferencing, deep learning, machine learning, and/or other artificial intelligence tasks. In at least one embodiment, AI system 1224 (e.g., NVIDIA's DGX) may include GPU-optimized software (e.g., a software stack) that may be executed using a plurality of GPUs 1222, in addition to DPUs, CPUs, RAM, storage, and/or other components, features, or functionality. In at least one embodiment, one or more AI systems 1224 may be implemented in cloud 1226 (e.g., in a data center) for performing some or all of AI-based processing tasks of system 1200.

In at least one embodiment, cloud 1226 may include a GPU-accelerated infrastructure (e.g., NVIDIA's NGC) that may provide a GPU-optimized platform for executing processing tasks of system 1200. In at least one embodiment, cloud 1226 may include an AI system(s) 1224 for performing one or more of AI-based tasks of system 1200 (e.g., as a hardware abstraction and scaling platform). In at least one embodiment, cloud 1226 may integrate with application orchestration system 1228 leveraging multiple GPUs to enable seamless scaling and load balancing between and among applications and services 1120. In at least one embodiment, cloud 1226 may tasked with executing at least some of services 1120 of system 1200, including compute services 1216, AI services 1218, and/or visualization services 1220, as described herein. In at least one embodiment, cloud 1226 may perform small and large batch inference (e.g., executing NVIDIA's TENSOR RT), provide an accelerated parallel computing API and platform 1230 (e.g., NVIDIA's CUDA), execute application orchestration system 1228 (e.g., KUBERNETES), provide a graphics rendering API and platform (e.g., for ray-tracing, 2D graphics, 3D graphics, and/or other rendering techniques to produce higher quality cinematics), and/or may provide other functionality for system 1200.

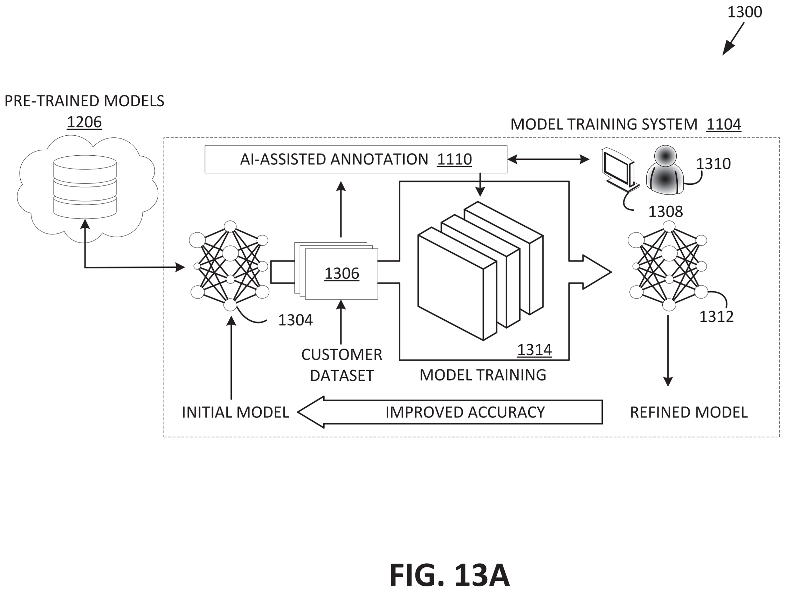

**FIG. 13A** illustrates a data flow diagram for a process 1300 to train, retrain, or update a machine learning model, in accordance with at least one embodiment, such as with regards to generating animation data from audio data. In at least one embodiment, process 1300 may be executed using, as a non-limiting example, system 1200 of FIG. 12. In at least one embodiment, process 1300 may leverage services 1120 and/or hardware 1122 of system 1200, as described herein. In at least one embodiment, refined models 1312 generated by process 1300 may be executed by deployment system 1106 for one or more containerized applications in deployment pipelines 1210.

In at least one embodiment, model training 1114 may include retraining or updating an initial model 1304 (e.g., a pre-trained model) using new training data (e.g., new input data, such as customer dataset 1306, and/or new ground truth data associated with input data). In at least one embodiment, to retrain, or update, initial model 1304, output or loss layer(s) of initial model 1304 may be reset, or deleted, and/or replaced with an updated or new output or loss layer(s). In at least one embodiment, initial model 1304 may have previously fine-tuned parameters (e.g., weights and/or biases) that remain from prior training, so training or retraining 1114 may not take as long or require as much processing as training a model from scratch. In at least one embodiment, during model training 1114, by having reset or replaced output or loss layer(s) of initial model 1304, parameters may be updated and re-tuned for a new data set based on loss calculations associated with accuracy of output or loss layer(s) at generating predictions on new, customer dataset 1306 (e.g., image data 1108 of FIG. 11).

In at least one embodiment, pre-trained models 1206 may be stored in a data store, or registry (e.g., model registry 1124 of FIG. 11). In at least one embodiment, pre-trained models 1206 may have been trained, at least in part, at one or more facilities other than a facility executing process 1300. In at least one embodiment, to protect privacy and rights of patients, subjects, or clients of different facilities, pre-trained models 1206 may have been trained, on-premise, using customer or patient data generated on-premise. In at least one embodiment, pre-trained models 1206 may be trained using cloud 1226 and/or other hardware 1122, but confidential, privacy protected patient data may not be transferred to, used by, or accessible to any components of cloud 1226 (or other off premise hardware). In at least one embodiment, where a pre-trained model 1206 is trained at using patient data from more than one facility, pre-trained model 1206 may have been individually trained for each facility prior to being trained on patient or customer data from another facility. In at least one embodiment, such as where a customer or patient data has been released of privacy concerns (e.g., by waiver, for experimental use, etc.), or where a customer or patient data is included in a public data set, a customer or patient data from any number of facilities may be used to train pre-trained model 1206 on-premise and/or off premise, such as in a datacenter or other cloud computing infrastructure.

In at least one embodiment, when selecting applications for use in deployment pipelines 1210, a user may also select machine learning models to be used for specific applications. In at least one embodiment, a user may not have a model for use, so a user may select a pre-trained model 1206 to use with an application. In at least one embodiment, pre-trained model 1206 may not be optimized for generating accurate results on customer dataset 1306 of a facility of a user (e.g., based on patient diversity, demographics, types of medical imaging devices used, etc.). In at least one embodiment, prior to deploying pre-trained model 1206 into deployment pipeline 1210 for use with an application(s), pre-trained model 1206 may be updated, retrained, and/or fine-tuned for use at a respective facility.

In at least one embodiment, a user may select pre-trained model 1206 that is to be updated, retrained, and/or fine-tuned, and pre-trained model 1206 may be referred to as initial model 1304 for training system 1104 within process 1300. In at least one embodiment, customer dataset 1306 (e.g., imaging data, genomics data, sequencing data, or other data types generated by devices at a facility) may be used to perform model training 1114 (which may include, without limitation, transfer learning) on initial model 1304 to generate refined model 1312. In at least one embodiment, ground truth data corresponding to customer dataset 1306 may be generated by training system 1104. In at least one embodiment, ground truth data may be generated, at least in part, by clinicians, scientists, doctors, practitioners, at a facility (e.g., as labeled clinic data 1112 of FIG. 11).

In at least one embodiment, AI-assisted annotation 1110 may be used in some examples to generate ground truth data. In at least one embodiment, AI-assisted annotation 1110 (e.g., implemented using an AI-assisted annotation SDK) may leverage machine learning models (e.g., neural networks) to generate suggested or predicted ground truth data for a customer dataset. In at least one embodiment, user 1310 may use annotation tools within a user interface (a graphical user interface (GUI)) on computing device 1308.

In at least one embodiment, user 1310 may interact with a GUI via computing device 1308 to edit or fine-tune (auto)annotations. In at least one embodiment, a polygon editing feature may be used to move vertices of a polygon to more accurate or fine-tuned locations.

In at least one embodiment, once customer dataset 1306 has associated ground truth data, ground truth data (e.g., from AI-assisted annotation, manual labeling, etc.) may be used by during model training 1114 to generate refined model 1312. In at least one embodiment, customer dataset 1306 may be applied to initial model 1304 any number of times, and ground truth data may be used to update parameters of initial model 1304 until an acceptable level of accuracy is attained for refined model 1312. In at least one embodiment, once refined model 1312 is generated, refined model 1312 may be deployed within one or more deployment pipelines 1210 at a facility for performing one or more processing tasks with respect to medical imaging data.

In at least one embodiment, refined model 1312 may be uploaded to pre-trained models 1206 in model registry 1124 to be selected by another facility. In at least one embodiment, his process may be completed at any number of facilities such that refined model 1312 may be further refined on new datasets any number of times to generate a more universal model.

**FIG. 13B** is an example illustration of a client-server architecture 1332 to enhance annotation tools with pre-trained annotation models, in accordance with at least one embodiment, such as with regards to generating animation data from audio data. In at least one embodiment, AI-assisted annotation tools 1336 may be instantiated based on a client-server architecture 1332. In at least one embodiment, annotation tools 1336 in imaging applications may aid radiologists, for example, identify organs and abnormalities. In at least one embodiment, imaging applications may include software tools that help user 1310 to identify, as a non-limiting example, a few extreme points on a particular organ of interest in raw images 1334 (e.g., in a 3D MRI or CT scan) and receive auto-annotated results for all 2D slices of a particular organ. In at least one embodiment, results may be stored in a data store as training data 1338 and used as (for example and without limitation) ground truth data for training. In at least one embodiment, when computing device 1308 sends extreme points for AI-assisted annotation 1110, a deep learning model, for example, may receive this data as input and return inference results of a segmented organ or abnormality. In at least one embodiment, pre-instantiated annotation tools, such as AI-Assisted Annotation Tool 1336B in FIG. 13B, may be enhanced by making API calls (e.g., API Call 1344) to a server, such as an Annotation Assistant Server 1340 that may include a set of pre-trained models 1342 stored in an annotation model registry, for example. In at least one embodiment, an annotation model registry may store pre-trained models 1342 (e.g., machine learning models, such as deep learning models) that are pre-trained to perform AI-assisted annotation on a particular organ or abnormality. These models may be further updated by using training pipelines 1204. In at least one embodiment, pre-installed annotation tools may be improved over time as new labeled clinic data 1112 is added.

It will be understood that aspects and embodiments are described herein purely by way of example, and that modifications of detail can be made within the scope of the claims.

Each apparatus, method, and feature disclosed in the description, and (where appropriate) the claims and drawings may be provided independently or in any appropriate combination.

Reference numerals appearing in the claims are by way of illustration only and shall have no limiting effect on the scope of the claims.

The disclosure of this application also includes the following numbered clauses:
Clause 1. A networking device:
   a memory; and
   a set of one or more processors coupled to the memory, wherein the set of one or more processors is to perform operations comprising:
      receiving network traffic from a first tenant of a multi-tenant system, wherein the received network traffic is associated with a first source host address of a first source host allocated to the first tenant and a first destination host address of a first destination host associated with the network traffic;
      providing the first source host address and the first destination host address as an input to a bi-directional address translation function, wherein the bi-directional address translation function translates given host addresses to networking addresses and given networking addresses to host addresses;
      obtaining one or more outputs of the bi-directional address translation function, wherein the one or more outputs comprise a first source networking address associated with the first source host and a first destination networking address associated with the first destination host; and
      forwarding the received network traffic of the first tenant to the first destination host via a network channel associated with the first tenant based on the first source networking address and the first destination networking address.
Clause 2. The networking device of clause 1, wherein the operations further comprise:
   receiving additional network traffic directed to the first tenant, wherein the additional network traffic is associated with at least a second destination networking address;
   providing the second destination networking address as an additional input to the bi-directional address translation function;
   obtaining one or more additional outputs of the bi-directional address translation function, the one or more additional outputs comprising the first source host address associated with the networking device; and
   forwarding the received additional network traffic to the first host based on the first source host address.
Clause 3. The networking device of clause 1, wherein the operations further comprise:
   receiving additional network traffic associated with a second tenant associated with at least one of the first host or a second host, wherein the additional network traffic is associated with a second source host address of a second source host and a second destination host address of a second destination host associated with the network traffic;
   providing the second source host address and the second destination host address as an additional input to the bi-directional address translation function;
   obtaining one or more additional outputs of the bi-directional address translation function, the one or more additional outputs comprise a second source networking address associated with the first host and a second destination networking address associated with the second destination host; and
   forwarding the additional network traffic to an additional recipient device via an additional network channel associated with the second tenant based on the second source networking address and the second destination networking address.
Clause 4. The networking device of clause 1, wherein the bi-directional address translation function comprises at least one of a bit masking function, a prefix modification function, or a bit value flipping function.
Clause 5. The networking device of clause 1, wherein the operations further comprise:
   receiving an instruction from a networking controller to initiate an isolation mode at the networking device;
   transmitting a response to the received instruction indicating that the isolation mode at the networking device is initiated; and
   responsive to transmitting the response, receiving the bi-directional address translation function from the networking controller.
Clause 6. The networking device of clause 5, wherein the instruction from the networking controller comprises a firmware command for the networking device.
Clause 7. The networking device of clause 5, wherein the transmitted response to the received instruction comprises an indication of a set of networking device addresses associated with the networking device, and wherein at least one portion of the received bi-directional address translation function references one or more of the set of networking device addresses.
Clause 8. The networking device of clause 1, forwarding the received network traffic of the first host via the network channel comprises:
   updating a header of one or more network packets of the received network traffic to include the first source networking address as a source for the received network traffic and the first destination networking address as an endpoint for the received network traffic.
Clause 9. The networking device of clause 8, wherein the updated header comprises a tunnel header of the one or more network packets and the endpoint comprises a tunnel endpoint.
Clause 10. The networking device of clause 1, wherein the networking device has a first networking device type, and wherein an amount of power consumed by the networking device falls below a threshold amount of power, wherein the threshold amount of power corresponds to an amount of power consumed by networking devices having a second networking device type.
Clause 11. The networking device of clause 10, wherein the first networking device type is a simple NIC type and the second networking device type is an intelligent NIC type.
Clause 12. The networking device of clause 1, wherein the first source networking device comprises a first tunnel identifier and the first destination networking device comprises a second tunnel identifier.
Clause 13. The networking device of clause 1, wherein the networking device is comprised in at least one of:
   a control system for an autonomous or semi-autonomous machine;
   a perception system for an autonomous or semi-autonomous machine;
   a system for performing simulation operations;
   a system for performing digital twin operations;
   a system for performing light transport simulation;
   a system for performing collaborative content creation for three-dimensional (3D) assets;
   a system for performing deep learning operations;
   a system implemented using an edge device;
   a system implemented using a robot;
   a system for performing conversational AI operations;
   a system for performing operations using one or more large language models (LLMs);
   a system for performing operations using one or more small language models (SLMs);
   a system for performing operations using one or more vision language models (VLMs);
   a system for performing operations using one or more multi-modal language models (MMLMs);
   a system for performing synthetic data generation;
   a system for generating synthetic data using AI;
   a system for presenting at least one of virtual reality content, augmented reality content, or mixed reality content;
   a system incorporating one or more virtual machines (VMs);
   a system using or deploying one or more inference microservices;
   a system that incorporates one or more machine learning models deployed in a service or microservice along with an OS-level virtualization package;
   a system implemented at least partially in a data center; or
   a system implemented at least partially using cloud computing resources.

Clause 14. A method comprising:
   receiving network traffic from a first tenant of a multi-tenant system, wherein the received network traffic is associated with a first source host address of a first source host allocated to the first tenant and a first destination host address of a first destination host associated with the network traffic;
   providing the first source host address and the first destination host address as an input to a bi-directional address translation function, wherein the bi-directional address translation function translates given host addresses to networking addresses and given networking addresses to host addresses;
   obtaining one or more outputs of the bi-directional address translation function, wherein the one or more outputs comprise a first source networking address associated with the first source host and a first destination networking address associated with the first destination host; and
   forwarding the received network traffic of the first tenant to the first destination host via a network channel associated with the first tenant based on the first source networking address and the first destination networking address.
Clause 15. The method of clause 14, further comprising:
   receiving additional network traffic directed to the first tenant, wherein the additional network traffic is associated with at least a second destination networking address;
   providing the second destination networking address as an additional input to the bi-directional address translation function;
   obtaining one or more additional outputs of the bi-directional address translation function, the one or more additional outputs comprising the first source host address associated with the networking device; and
   forwarding the received additional network traffic to the first host based on the first source host address.
Clause 16. The method of clause 14, further comprising:
   receiving additional network traffic associated with a second tenant associated with at least one of the first host or a second host, wherein the additional network traffic is associated with a second source host address of a second source host and a second destination host address of a second destination host associated with the network traffic;
   providing the second source host address and the second destination host address as an additional input to the bi-directional address translation function;
   obtaining one or more additional outputs of the bi-directional address translation function, the one or more additional outputs comprise a second source networking address associated with the first host and a second destination networking address associated with the second destination host; and
   forwarding the additional network traffic to an additional recipient device via an additional network channel associated with the second tenant based on the second source networking address and the second destination networking address.
Clause 17. The method of clause 14, wherein the bi-directional address translation function comprises at least one of a bit masking function, a prefix modification function, or a bit value flipping function.
Clause 18. The method of clause 14, further comprising:
   receiving an instruction from a networking controller to initiate an isolation mode at the networking device;
   transmitting a response to the received instruction indicating that the isolation mode at the networking device is initiated; and
   responsive to transmitting the response, receiving the bi-directional address translation function from the networking controller.
Clause 19. The method of clause 18, wherein the instruction from the networking controller comprises a firmware command for the networking device.
Clause 20. A non-transitory computer readable medium comprising instructions that, when executed by a set of one or more processors, cause the set of one or more processors to perform operations comprising:
   receiving network traffic from a first tenant of a multi-tenant system, wherein the received network traffic is associated with a first source host address of a first source host allocated to the first tenant and a first destination host address of a first destination host associated with the network traffic;
   providing the first source host address and the first destination host address as an input to a bi-directional address translation function, wherein the bi-directional address translation function translates given host addresses to networking addresses and given networking addresses to host addresses;
   obtaining one or more outputs of the bi-directional address translation function, wherein the one or more outputs comprise a first source networking address associated with the first source host and a first destination networking address associated with the first destination host; and
   forwarding the received network traffic of the first tenant to the first destination host via a network channel associated with the first tenant based on the first source networking address and the first destination networking address.

## Claims

1. A networking device:
a memory; and
a set of one or more processors coupled to the memory, wherein the set of one or more processors is to perform operations comprising:
receiving network traffic from a first tenant of a multi-tenant system, wherein the received network traffic is associated with a first source host address of a first source host allocated to the first tenant and a first destination host address of a first destination host associated with the network traffic;
providing the first source host address and the first destination host address as an input to a bi-directional address translation function, wherein the bi-directional address translation function translates given host addresses to networking addresses and given networking addresses to host addresses;
obtaining one or more outputs of the bi-directional address translation function, wherein the one or more outputs comprise a first source networking address associated with the first source host and a first destination networking address associated with the first destination host; and
forwarding the received network traffic of the first tenant to the first destination host via a network channel associated with the first tenant based on the first source networking address and the first destination networking address.

2. The networking device of claim 1, wherein the operations further comprise:
receiving additional network traffic directed to the first tenant, wherein the additional network traffic is associated with at least a second destination networking address;
providing the second destination networking address as an additional input to the bi-directional address translation function;
obtaining one or more additional outputs of the bi-directional address translation function, the one or more additional outputs comprising the first source host address associated with the networking device; and
forwarding the received additional network traffic to the first host based on the first source host address.

3. The networking device of claim 1 or 2, wherein the operations further comprise:
receiving additional network traffic associated with a second tenant associated with at least one of the first host or a second host, wherein the additional network traffic is associated with a second source host address of a second source host and a second destination host address of a second destination host associated with the network traffic;
providing the second source host address and the second destination host address as an additional input to the bi-directional address translation function;
obtaining one or more additional outputs of the bi-directional address translation function, the one or more additional outputs comprise a second source networking address associated with the first host and a second destination networking address associated with the second destination host; and
forwarding the additional network traffic to an additional recipient device via an additional network channel associated with the second tenant based on the second source networking address and the second destination networking address.

4. The networking device of claim 1, 2, or 3, wherein the bi-directional address translation function comprises at least one of a bit masking function, a prefix modification function, or a bit value flipping function.

5. The networking device of any preceding claim, wherein the operations further comprise:
receiving an instruction from a networking controller to initiate an isolation mode at the networking device;
transmitting a response to the received instruction indicating that the isolation mode at the networking device is initiated; and
responsive to transmitting the response, receiving the bi-directional address translation function from the networking controller.

6. The networking device of claim 5, wherein the instruction from the networking controller comprises a firmware command for the networking device.

7. The networking device of claim 5 or 6, wherein the transmitted response to the received instruction comprises an indication of a set of networking device addresses associated with the networking device, and wherein at least one portion of the received bi-directional address translation function references one or more of the set of networking device addresses.

8. The networking device of any preceding claim, forwarding the received network traffic of the first host via the network channel comprises:
updating a header of one or more network packets of the received network traffic to include the first source networking address as a source for the received network traffic and the first destination networking address as an endpoint for the received network traffic.

9. The networking device of claim 8, wherein the updated header comprises a tunnel header of the one or more network packets and the endpoint comprises a tunnel endpoint.

10. The networking device of any preceding claim, wherein the networking device has a first networking device type, and wherein an amount of power consumed by the networking device falls below a threshold amount of power, wherein the threshold amount of power corresponds to an amount of power consumed by networking devices having a second networking device type.

11. The networking device of claim 10, wherein the first networking device type is a simple NIC type and the second networking device type is an intelligent NIC type.

12. The networking device of any preceding claim, wherein the first source networking device comprises a first tunnel identifier and the first destination networking device comprises a second tunnel identifier.

13. The networking device of any preceding claim, wherein the networking device is comprised in at least one of:
a control system for an autonomous or semi-autonomous machine;
a perception system for an autonomous or semi-autonomous machine;
a system for performing simulation operations;
a system for performing digital twin operations;
a system for performing light transport simulation;
a system for performing collaborative content creation for three-dimensional (3D) assets;
a system for performing deep learning operations;
a system implemented using an edge device;
a system implemented using a robot;
a system for performing conversational AI operations;
a system for performing operations using one or more large language models (LLMs);
a system for performing operations using one or more small language models (SLMs);
a system for performing operations using one or more vision language models (VLMs);
a system for performing operations using one or more multi-modal language models (MMLMs);
a system for performing synthetic data generation;
a system for generating synthetic data using AI;
a system for presenting at least one of virtual reality content, augmented reality content, or mixed reality content;
a system incorporating one or more virtual machines (VMs);
a system using or deploying one or more inference microservices;
a system that incorporates one or more machine learning models deployed in a service or microservice along with an OS-level virtualization package;
a system implemented at least partially in a data center; or
a system implemented at least partially using cloud computing resources.

14. A method comprising:
receiving network traffic from a first tenant of a multi-tenant system, wherein the received network traffic is associated with a first source host address of a first source host allocated to the first tenant and a first destination host address of a first destination host associated with the network traffic;
providing the first source host address and the first destination host address as an input to a bi-directional address translation function, wherein the bi-directional address translation function translates given host addresses to networking addresses and given networking addresses to host addresses;
obtaining one or more outputs of the bi-directional address translation function, wherein the one or more outputs comprise a first source networking address associated with the first source host and a first destination networking address associated with the first destination host; and
forwarding the received network traffic of the first tenant to the first destination host via a network channel associated with the first tenant based on the first source networking address and the first destination networking address.

15. A non-transitory computer readable medium comprising instructions that, when executed by a set of one or more processors, cause the set of one or more processors to perform operations comprising:
receiving network traffic from a first tenant of a multi-tenant system, wherein the received network traffic is associated with a first source host address of a first source host allocated to the first tenant and a first destination host address of a first destination host associated with the network traffic;
providing the first source host address and the first destination host address as an input to a bi-directional address translation function, wherein the bi-directional address translation function translates given host addresses to networking addresses and given networking addresses to host addresses;
obtaining one or more outputs of the bi-directional address translation function, wherein the one or more outputs comprise a first source networking address associated with the first source host and a first destination networking address associated with the first destination host; and
forwarding the received network traffic of the first tenant to the first destination host via a network channel associated with the first tenant based on the first source networking address and the first destination networking address.
